# EUROPÄISCHE PATENTANMELDUNG

(11) **EP 1 398 330 A2**
(43) Veröffentlichungstag der Anmeldung: **17.03.2004**
(21) Anmeldenummer: 03025918.8
(22) Anmeldetag: 27.11.2000
(51) Int. Cl.: C08F 4/80, C07F 15/00

(54) **Polymerisationsaktive Übergangsmetallkomplexverbindungen mit sterisch anspruchsvollem Ligandensystem**

(30) Priorität: 09.12.1999 DE 19959251
(62) Teilanmeldung aus: 00989894.1
(71) Anmelder: Ser.V. GmbH, 89275 Oberelchingen (DE)
(72) Erfinder: Rieger, Bernhard, 89295 Oberelchingen (DE); Schmid, Markus, 89081 Ulm (DE); Eberhardt, Robert, 89518 Heidenheim (DE); Geprägs, Michael, 67245 Lambsheim (DE); Queisser, Joachim, 68165 Mannheim (DE)
(74) Vertreter: Pfenning, Meinig & Partner

(57) **Zusammenfassung**

Übergangsmetallkomplexverbindungen mit sterisch anspruchsvollem Ligandensystem der allgemeinen Formel (I) 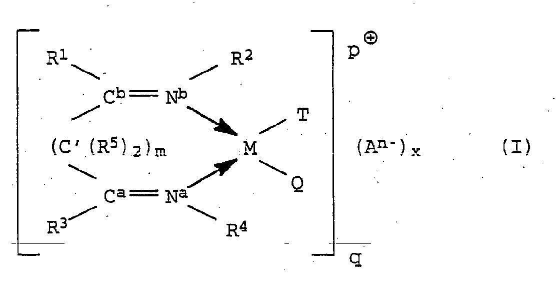 in der die Substituenten
- R², R⁴: C₄- bis C₁₆-Hetero-Aryl oder C₆- bis C₁₆-Aryl mit C₄- bis C₁₆-Hetero-Aryl oder C₆- bis C₁₆-Arylsubstituenten in den beiden vicinalen Positionen zur Verknüpfungsstelle mit N^{a} bzw. N^{b} und
- M: ein Metall der Gruppen 8 bis 10 den Periodensystems der Elemente
bedeuten.

## Beschreibung

Die vorliegende Erfindung betrifft polymerisationsaktive Übergangsmetallkomplexverbindungen mit sterisch anspruchsvollem Ligandensystem sowie ein Katalysatorsystem enthaltend vorgenannte Übergangsmetallverbindungen. Des weiteren betrifft die Erfindung die Verwendung des Katalysatorsystems für die Herstellung von Olefin(co)polymeren sowie ein Verfahren zur (Co)polymerisation von olefinisch ungesättigten Verbindungen.

Übergangsmetallkomplexe als Katalysatoren für die Polymerisation von olefinisch ungesättigten Verbindungen sind dem Fachmann bekannt. Für die koordinative Polymerisation von unpolaren Olefinen wie Ethen oder Propen haben sich Katalysatoren auf der Basis von Metallen der Gruppe IVB des Periodensystems der Elemente, insbesondere in Form von Metallocen- und Halbsandwichkomplexen etabliert (s.a. H.H. Brintzinger, D. Fischer, R. Mülhaupt, B. Rieger, R.M. Waymouth, Angew. Chem. Int. Ed. Engl. 1995, 34, 1143-1170). Diese Komplexverbindungen sind in der Regel sehr empfindlich gegenüber Sauerstoff und Feuchtigkeit und demzufolge häufig nur aufwendig herzustellen und zu handhaben. Für eine wirksame Reaktionsführung ist diesen Metallocenkomplexen auf der Basis der frühen Übergangsmetalle stets ein Cokatalysator in nicht geringer Menge zuzusetzen, was aufwendige Aufreinigungsschritte erforderlich machen und zu Produktverunreinigungen führen kann.

Brookhart et al., J. Am. Chem. Soc., 1995, 117, 6414-6415, konnten zeigen, daß auch Komplexverbindungen auf der Basis der späten Übergangsmetalle, nämlich Nickel- und Palladiumkomplexe, für die Polymerisation von Ethen und Propen in Frage kommen, wenn als Chelatligand eine Bisiminverbindung mit 2,6-Diisopropylphenylsubstituenten an den Iminstickstoffatomen verwendet wird. Die 2,6-Diisopropylphenylsubstituenten sollen das Metallzentrum abschirmen helfen, wodurch Kettenübertragungs- und/oder Eliminierungsreaktionen unterbunden würden, was wiederum erst akzeptable Molekulargewichte ermögliche.

Des weiteren gelang es Brookhart et al., J. Am. Chem. Soc., 1996, 118, 267-268, Ethen mit polaren Monomeren wie Methylacrylat mit Hilfe der beschriebenen Übergangsmetallkomplexe zu copolymerisieren. Diese Copolymere werden beispielsweise aufgrund ihrer elastomeren Eigenschaften als Zähmodifikatoren für technische Kunststoffe wie Polybutylenterephthalat oder Polyamid eingesetzt. Technisch werden Copolymere mit elastomerem Eigenschaftsprofil jedoch zumeist noch auf radikalischem Wege hergestellt, was zu Polymeren mit breiter Molekulargewichtsverteilung und zu einem inhomogenen. Einbau des die funktionelle Gruppe tragenden Olefins führt. Derartige Polymere finden sich beispielsweise bei Hausmann et al., Kunststoffe, 1999, 9, 154, beschrieben.

Zwar können mit Hilfe der bei Brookhart (s.o.) beschriebenen Bisiminkomplexe Copolymere mit relativ enger Molekulargewichtsverteilung erzielt werden. Es wäre jedoch wünschenswert, auf Katalysatorsysteme mit sehr hoher Aktivität zurückgreifen zu können, die zugleich unter den jeweiligen Polymeriationsbedingungen hinreichend stabil sind und über eine lange Lebensdauer verfügen, so daß sie sich auch für den Einsatz in der großtechnischen Fertigung eignen. Zudem wäre es wünschenswert, ein strukturell einheitliches Katalysatorsystem verfügbar zu machen, mit dem gezielt unterschiedliche Polymermikrostrukturen erhalten werden können.

Der Erfindung lag daher die Aufgabe zugrunde, Übergangsmetallkomplexverbindungen verfügbar zu machen, die sich als hochaktive Polymerisationskatalysatoren für die (Co)polymerisation von polaren und/oder unpolaren Monomeren eignen und die keine oder nur geringe Zusätze an Cokatalysatorkomponente erfordern.

Demgemäß wurden polymerisationsaktive Übergangsmetallkomplexverbindungen mit sterisch anspruchsvollem Ligandensystem der allgemeinen Formel (I) gefunden, 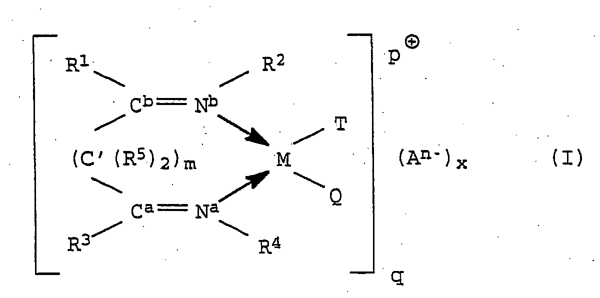
- R¹, R³: Wasserstoff, C₁- bis C₂₀-Alkyl, C₃- bis C₁₀-Cycloalkyl, C₆- bis C₁₆-Aryl, Alkylaryl mit 1 bis 10 C-Atomen im Alkyl- und 6 bis 16 C-Atomen im Arylteil, Si(R⁶)₃, N(R⁶) (R⁷), OR⁶, SR⁶ oder R¹ und R³ bilden gemeinsam mit C^{a}, C^{b} und gegebenenfalls C' einen fünf-, sechs- oder siebengliedrigen aliphatischen oder aromatischen, substituierten oder unsubstituierten Carbo- oder Heterocyclus,
- R², R⁴: C₄- bis C₁₆-Hetero-Aryl oder C₆- bis C₁₆-Aryl mit C₄- bis C₁₆-Hetero-Aryl oder C₆- bis C₁₆-Arylsubstituenten in den beiden vicinalen Positionen zur Verknüpfungsstelle mit N^{a} bzw. N^{b},
- R⁵: Wasserstoff, C₁- bis C₁₀-Alkyl, C₆- bis C₁₆-Aryl oder Alkylaryl mit 1 bis 10 C-Atomen im Alkyl- und 6 bis 16 C-Atomen im Arylteil,
- R⁶, R⁷: C₁- bis C₁₀-Alkyl, C₆- bis C₁₆-Aryl oder Alkylaryl mit 1 bis 10 C-Atomen im Alkyl- und 6 bis 16 C-Atomen im Arylteil,
- m: 0 oder 1,
- M: ein Metall der Gruppe VIIIB des Periodensystems der Elemente,
- T, Q: neutrale oder monoanionische monodentate Liganden oder T und Q bilden zusammen eine Diketoenolat-, eine C₂- oder C₃-Alkyleneinheit mit einer Methylketon- oder einer linearen C₁- bis C₄-Alkylester- oder Nitrilendgruppe,
- A: ein nicht oder schlecht koordinierendes Anion,
- x, p: 0, 1, 2 oder 3 und
- q, n: 1, 2 oder 3.

Des weiteren wurde ein Katalysatorsystem enthaltend Übergangsmetallverbindungen (I) und eine starke neutrale Lewis-Säure, eine ionische Verbindung mit einem Lewis-sauren Kation oder eine ionische Verbindung mit einer Brönsted-Säure als Kation als Cokatalysator gefunden. Außerdem wurde die Verwendung der Übergangsmetallverbindungen (I) sowie des Katalysatorsystems für die Herstellung von Olefin(co)polymeren sowie ein Verfahren zur (Co)polymerisation von olefinisch ungesättigten Verbindungen mit Hilfe des vorgenannten Katalysatorsystems gefunden.

In bevorzugten Übergangsmetallverbindungen (I) haben die Substituenten und Indizes die folgende Bedeutung:
- R¹, R³: Wasserstoff, Methyl, Ethyl, i-Propyl, t-Butyl, Methoxy, Ethoxy, i-Propoxy, t-Butoxy, Trifluormethyl, Phenyl, Naphthyl, Tolyl, 2-i-Propylphenyl, 2-t-Butylphenyl, 2,6-Di-i-propylphenyl, 2-Trifluormethylphenyl, 4-Methoxyphenyl, Pyridyl oder Benzyl,
- R², R⁴: 2,6-Diphenyl-, 2,6-Di-(4'-methylphenyl)-, 2,6-Di-(4'-t-butylphenyl)-, 2,6-Di-(4'-methoxyphenyl)-, 2,6-Bis-(3',5'-Dimethylphenyl)-, 2,6-Bis-(2',4',6'-Trimethylphenyl)phenyl oder 2,5-Diphenyl-, 2,5-Di-(4'- methylphenyl)-, 2,5-Di-(4'-t-butylphenyl)-, 2,5-Di-(4'-methoxyphenyl)-, 2,5-Bis-(3',5'-dimethylphenyl)-, 2,5-Bis-(2',4,',6'-trimethylphenyl)pyrrolidyl oder 2,5-Diphenyl-, 2,5-Di-(4'-methylphenyl)-, 2,5-Di-(4'-t-butylphenyl)-, 2,5-Di-(4'-methoxyphenyl)-, 2,5-Bis-(3',5'-dimethylphenyl)-, 2,5-Bis-(2',4',6'-trimethylphenyl)pyrrolid,
- m: 0,
- M: Pd oder Ni,
- T: ein Halogenid- oder Sulfonation,
- Q: ein Halogenid- oder ein Sulfonation oder ein C₁- bis C₆-Alkylrest,
- A: ein nicht oder schlecht koordinierendes Anion,
- x, p: 0 oder 1 und
- q, n: 1 oder 2.

Die Reste R² und R⁴ stellen C₄- bis C₁₆-Heteroaryl- oder C₆- bis C₁₆-Arylgruppen dar, die jeweils in ihren beiden vicinalen.Positionen zu der Verknüpfungsstelle zwischen Iminstickstoffatom N^{a} bzw. N^{b} und dem Aryl- bzw. Heteroarylrest, d.h. z.B. im Fall eines Phenylrestes zweifach ortho-ständig zur kovalenten Bindung zwischen dem Phenylrest und dem Iminstickstoff, C₄- bis C₁₆-Heteroaryl- oder C₆- bis C₁₆-Arylgruppen tragen. Diese Positionen in den Resten R² bzw. R⁴ können mit identischen wie auch mit voneinander verschiedenen Aryl- oder Heteroarylgruppen substituiert sein. Diese Hetero- und Arylgruppen können selber wiederum mit funktionellen Gruppen auf der Basis der Elemente aus den Gruppen IVA, VA, VIA und VIIA des Periodensystems der Elemente substituiert sein. Desgleichen können die Heteroaryl- bzw. Arylreste R² und R⁴ neben den genannten, in den vicinalen Positionen befindlichen substituierten oder unsubstituierten Hetero- oder Arylresten einen oder mehrere weitere Substituenten auf der Basis der Elemente aus den Gruppen IVA, VA, VIA und VIIA des Periodensystems der Elemente aufweisen. Geeignete funktionelle Gruppen sind beispielsweise geradlinig oder verzweigtes C₁- bis C₁₀-Alkyl, bevorzugt C₁- bis C₆-Alkyl, wie Methyl, Ethyl, n- oder i-Propyl, n-, i- oder t-Butyl, partiell oder perhalogeniertes C₁- bis C₁₀-Alkyl, bevorzugt C₁- bis C₆-Alkyl, wie Trifluor- oder Trichlormethyl oder 2,2,2-Trifluorethyl, Triorganosilyl, wie Trimethyl-, Triethyl-, Tri-t-butyl-, Triphenyl- oder t-Butyl-diphenylsilyl, die Nitro-, Cyano- oder Sulfonatogruppe, Amino, beispielsweise NH₂, Dimethylamino, Di-i-propylamino, Di-n-butylamino, Diphenylamino oder Dibenzylamino, C₁- bis C₁₀-Alkoxy, bevorzugt C₁- bis C₆-Alkoxy, wie Methoxy, Ethoxy, i-Propoxy oder t-Butoxy, oder Halogen, wie Fluorid, Chlorid, Bromid oder Iodid.

Bevorzugt unter den Arylresten R² und R⁴ sind Phenyl-, Naphthyl- und Anthracenylgruppen, besonders bevorzugt sind Phenyl- und Naphthylgruppen und insbesondere bevorzugt ist die Phenylgruppe. Diese Gruppen sind in ihren vicinalen bzw. ortho-Positionen wiederum bevorzugt mit Phenyl- bzw. substituierten Phenylresten substituiert. Geeignete Substituenten stellen dabei die Methyl-, i-Propyl-, t-Butyl-, Methoxy-, i-Propoxy- und t-Butoxygruppe, bevorzugt in meta- und besonders bevorzugt in para-Position, dar. Diese bevorzugten Arylreste R², R⁴ können neben den vicinalen bzw. ortho-Substituenten in den weiteren Positionen des aromatischen Ringsystems ein oder mehrere funktionelle Gruppen tragen. Bevorzugt ist bei einem bis-ortho-substituierten Phenylrest R², R⁴ eine zusätzliche Substitution in para-Position, z.B. mit einer Methyl-, i-Propyl-, t-Butyl-, Methoxy-, i-Propoxy-, t-Butoxy-, Chlor- oder Bromgruppe.

Bevorzugte Arylreste R² und R⁴ sind z.B. 2,6-Diphenyl-, 2,6-Di-(4'- methylphenyl)-, 2,6-Di-(4'-t-butylphenyl)- und 2,6-Di-(4'-methoxyphenyl)- sowie 2,6-Bis-(3',5'-Dimethylphenyl)- und 2,6-Bis-(2',4',6'-Trimethylphenyl)phenyl.

Geeignete C₄- bis C₁₆-Heteroarylreste R² und R⁴ können neben den für Arylreste beschriebenen Substituenten in vicinaler Position in gleicher Weise in den weiteren Positionen des Heteroarylrestes mit funktionellen Gruppen auf der Basis der Elemente der Gruppen IVA, VA, VIA oder VIIA des Periodensystems substituiert sein. Bevorzugt sind C₄- bis C₁₃-Heteroaryl-, besonders bevorzugt C₄- bis C₉-Heteroarylreste wie die Pyrrolidyl- (über ein Ringkohlenstoffatom mit dem Iminstickstoff verknüpft) oder die Pyrrolidgruppe (über den Pyrrolstickstoff mit dem Iminstickstoff verknüpft) oder die Imidazolyl- (C-N-verknüpft), Imidazolid- (N-N-verknüpft), Benzimidazolyl-, Benzimidazolid-, Pyrazolyl-, Pyrazolid-, Pyridinyl-, Pyrimidinyl-, Chinolyl- oder die Isochinolylgruppe. Unter diesen sind der bis-ortho-substituierte Pyrrolidyl- sowie insbesondere der bis-ortho-substituierte Pyrrolidrest hervorzuheben. Als ortho-Substituenten sind die Phenylgruppe bzw. substituierte Phenylreste bevorzugt. Geeignete Substituenten stellen dabei die Methyl-, i-Propyl-, t-Butyl-, Methoxy-, i-Propoxy- und t-Butoxyxgruppe, bevorzugt in meta- und besonders bevorzugt in para-Position, dar.

Insbesondere sind als Heteroarylreste R², R⁴ bevorzugt 2,5-Diphenyl-, 2,5-Di-(4'-methylphenyl)-, 2,5-Di-(4'-t-butylphenyl)- und 2,5-Di-(4'-methoxyphenyl)pyrrolidyl oder die entsprechenden 2,5-Pyrrolidsubstituenten.

Als Reste R¹ und R³ in (I) kommen Wasserstoff, C₁- bis C₁₀-Alkyl, C₃- bis C₁₀-Cycloalkyl, C₆- bis C₁₆-Aryl, Alkylaryl mit 1 bis 10 C-Atomen im Alkyl- und 6 bis 16 C-Atomen im Arylteil, ein Silyl-(-Si(R⁶)₃), Amino- (-N(R⁶) (R⁷)), Ether- (-OR⁶) oder Thioetherrest (-SR⁶) in Frage. Des weiteren können die Reste R¹ und R³ zusammen mit C^{a}, C^{b} und gegebenenfalls C' einen fünf-, sechs- oder siebengliedrigen aliphatischen oder aromatischen, substituierten oder unsubstituierten Carbo- oder Heterocyclus bilden. Unter den Resten R¹ und R³ sind Wasserstoff, Methyl, Ethyl, i-Propyl, t-Butyl, Methoxy, Ethoxy, i-Propoxy, t-Butoxy, Trifluormethyl, Phenyl, Naphthyl, Tolyl, 2-i-Propylphenyl, 2-t-Butylphenyl, 2,6-Di-i-propylphenyl, 2-Trifluormethylphenyl, 4-Methoxyphenyl, Pyridyl oder Benzyl sowie insbesondere Wasserstoff, Methyl, Ethyl, i-Propyl oder t-Butyl bevorzugt. Ligandverbindungen mit diesen Resten finden sich bei K. Vrieze und G. van Koten, Adv. Organomet. Chem., 1982, 21, 151- 239, beschrieben. Unter den cyclischen Systemen, vorzugsweise gebildet aus R¹, R³, C^{a} und C^{b}, sind aromatische Systeme, insbesondere Phenanthren- und Camphersysteme bevorzugt (s.a. J. Matei, T. Lixandru, Bul. Inst. Politeh. Isai, 1967, 13, 245). Des weiteren sind als heterocyclische Systeme R¹, R³ 1,4-Dithiane, wie in WO 98/37110 beschrieben, bevorzugt.

Der Rest R⁵ stellt bevorzugt Wasserstoff oder Methyl, insbesondere Wasserstoff dar.

Als Metalle M in (I) kommen alle Elemente der Gruppe VIIIB des Periodensystems der Elemente, also Eisen, Cobalt, Nickel, Ruthenium, Rhodium, Palladium, Osmium, Iridium oder Platin in Betracht. Bevorzugt werden Nickel, Rhodium, Palladium oder Platin eingesetzt, wobei Nickel und Palladium besonders bevorzugt sind. Eisen und Cobalt liegen in den Metallverbindungen (I) im allgemeinen zwei- oder dreifach positiv geladen, Palladium, Platin und Nickel zweifach positiv geladen und Rhodium ein- oder dreifach positiv geladen vor.

T und Q stellen in einer Ausführungsform neutrale und/oder monoanionische monodentate Liganden dar. Als neutrale Liganden kommen Lewis-Basen in Frage, beispielsweise Acetonitril, Benzonitril, Diethylether, Tetrahydrofuran, Amine, Ketone, Phosphane, Essigsäureethylester, Dimethylsulfoxid, Dimethylformamid oder Hexamethylphosphorsäuretriamid. Als Lewis-basischer Neutralligand ist ebenfalls Ethen oder allgemein eine olefinisch ungesättigte Verbindung geeignet. Monoanionische Liganden stellen zum Beispiel Carbanionen auf der Basis substituierter oder unsubstituierter Alkyl-, Aryl- oder Acylreste oder Halogenid-, Sulfonat- oder Borationen dar.

T in (I) bedeutet bevorzugt einen monoanionischen Rest wie Sulfonat, Borat, Chlorid, Bromid oder Jodid, Methyl, Phenyl, Benzyl oder ein C₁- bis C₁₀-Alkyl, das in β-Position zum Metallzentrum M keine Wasserstoffatome aufweist. Hierunter fallen auch solche Reste, die über eine C₁- bis C₄-Alkylester- oder eine Nitrilendgruppe verfügen. Besonders geeignet als Ligand T sind Trifluormethylsulfonat oder Halogenide, bevorzugt Chlorid, insbesondere wenn M = Pd, bzw. Bromid, insbesondere wenn M = Ni, sowie Methyl als Alkylrest.

Q stellt bevorzugt Ligandreste wie Acetonitril, Benzonitril, Ethen, Triphenylphosphin als monodentate Phosphorverbindung, Pyridin als monodentate aromatische Stickstoffverbindung, Acetat, Propionat oder Butyrat, insbesondere Acetat als geeignetes Carboxylat, einen linearen Alkylether, z.B. einen linearen Di-C₂- bis C₆-Alkylether wie Diethylether oder Di-i-propylether, bevorzugt Diethylether, einen cyclischen Alkylether wie Tetrahydrofuran oder Dioxan, bevorzugt Tetrahydrofuran, einen linearen C₁- bis C₄-Alkylester, z.B. Essigsäureethylester, Dimethylsulfoxid, Dimethylformamid, Hexamethylphosphorsäuretriamid oder ein Halogenid-, Borat- oder Sulfonation dar. Im Fall von Nickelkomplexen (I) (M = Ni) ist Q vorzugsweise ein Halogenid, z.B. ein Chlorid, Bromid oder Jodid, insbesondere ein Bromid, im Fall von Palladiumkomplexen (M = Pd) ist Q vorzugsweise ein Halogenid, z.B. Chlorid, Bromid oder Jodid, insbesondere Chlorid.

Des weiteren können die Reste T und Q gemeinsam eine C₂- oder C₃-Alkyleneinheit mit einer Methylketon-, einer linearen C₁- bis C₄-Alkylester- oder einer Nitrilendgruppe oder ein Diketoenolat, z.B. Acetylacetonat, darstellen. Bevorzugt stellen hierbei T und Q zusammen eine -(CH₂CH₂CH₂C(O)OCH₃-Einheit dar und bilden auf diese Weise gemeinsam mit M einen sechsgliedrigen Cyclus. Während die endständige Methyleneinheit mit Meine Metall/Kohlenstoffbindung ausbildet, tritt die Carbonylgruppe koordinativ in Wechselwirkung mit M.

Unter den Nickelkomplexen (I) sind Nickeldihalogenid-, vorzugsweise Nickeldichlorid- oder Nickeldibromid-, oder Nickeldimethylkomplexe (p = 0) und unter diesen insbesondere die Nickeldibromidkomplexe bevorzugt. In bevorzugten Palladiumkomplexen stellt T einen Alkylrest, insbesondere Methyl, oder ein Halogenid, insbesondere Chlorid, und Q ein Halogenid, insbesondere Chlorid dar.

Unter einem nicht oder schlecht koordinierenden Anion A sind erfindungsgemäß solche Anionen zu verstehen, deren Ladungsdichte am anionischen Zentrum aufgrund elektronegativer Reste vermindert ist und/oder deren Reste das anionische Zentrum sterisch abschirmen. Geeignete Anionen A sind u.a. Antimonate, Sulfate, Sulfonate, Borate, Phosphate oder Perchlorate wie B[C₆H₃(CF₃)₂]₄⁻ (Tetrakis(3,5-bis-(trifluormethyl)phenyl)borat), B[C₆F₅]₄⁻ oder BF₄⁻ sowie SbF₆⁻, AlF₄⁻, AsF₆⁻, PF₆⁻ oder Trifluoracetat (CF₃SO₃⁻). Bevorzugt sind B[C₆H₃(CF₃)₂]₄⁻, SbF₆⁻ und PF₆⁻. Besonders bevorzugt wird auf Borate, insbesondere B[C₆H₃(CF₃)₂]₄⁻, zurückgegriffen. Geeignete nicht oder schlecht koordinierende Anionen sowie deren Herstellung werden z.B. bei S.H. Strauss, Chem. Rev. 1993, 93, 927-942, sowie bei W. Beck und K. Sünkel, Chem. Rev. 1988, 88, 1405-1421, beschrieben.

Bevorzugte Übergangsmetallverbindungen (I) sind beispielsweise
Bis-2,3-(2,6-diphenylphenylimin)butan-palladium(methyl)chlorid,
Bis-2,3-(2,6-di-(4'-methylphenyl)phenylimin)butan-palladium(methyl)chlorid,
Bis-2,3-(2,6-di-(4'-methoxyphenyl)phenylimin)butan-palladium(methyl)chlorid,
Bis-2,3-(2,6-di-(4'-trifluormethylphenyl)phenylimin)butan-palladium (methyl) chlorid,
Bis-2,3-(2,6-di-(4'-t-butylphenyl)phenylimin)butan-palladium(methyl)chlorid,
Bis-2,3-(2,6-diphenyl-4-methylphenylimin)butan-palladium(methyl)chlorid,
Bis-2,3-(2,6-di-(4'-methylphenyl)-4-methylphenylimin)butan-palladium(methyl)chlorid,
Bis-2,3-(2,6-di-(4'-methoxyphenyl)-4-methylphenylimin)butan-palladium(methyl)chlorid,
Bis-2,3-(2,6-di-(4'-trifluormethylphenyl)-4-methylphenylimin)butan-palladium(methyl)chlorid,
Bis-2,3-(2,6-di-(4'-t-butylphenyl)-4-methylphenylimin)butan-palladium(methyl)chlorid sowie
[Bis-2,3-(2,6-diphenylphenylimin)butan-palladium(methyl) (acetonitril)]-tetrakis-(3,5-bis-(trifluormethyl)phenyl)borat,
Bis-2,3-(2,6-di-(4'-methylphenyl)phenylimin)butan-palladium(methyl)chlorid,
Bis-2,3-(2,6-di-(4'-methoxyphenyl)phenylimin)butan-palladium(methyl)chlorid,
[Bis-2,3-(2,6-di-(4'-trifluormethylphenyl)phenylimin)butan-palladium(methyl)(acetonitril)]-tetrakis-(3,5-bis-(trifluormethyl)phenyl)borat,
[Bis-2,3-(2,6-di-(4'-t-butylphenyl)phenylimin)butan-palladium(methyl)(acetonitril)]-tetrakis-(3,5-bis-(trifluormethyl)phenyl)borat,
[Bis-2, 3- (2, 6-diphenyl-4-methylphenylimin)butan-palladium(methyl)chlorid,
[Bis-2,3-(2,6-di-(4'-methylphenyl)-4-methylphenylimin)butan-palladium(methyl) (acetonitril)]-tetrakis-(3,5-bis-(trifluormethyl)phenyl)borat,
[Bis-2,3-(2,6-di-(4'-methoxyphenyl)-4-methylphenylimin)butan-palladium(methyl)(acetonitril)]-tetrakis-(3,5-bis-(trifluormethyl)phenyl)borat,
[Bis-2,3-(2,6-di-(4'-trifluormethylphenyl)-4-methylphenylimin)butan-palladium(methyl) (acetonitril)]-tetrakis-(3,5-bis-(trifluormethyl)phenyl)borat und
[Bis-2,3-(2,6-di-(4'-t-butylphenyl)-4-methylphenylimin)butan-palladium(methyl)(acetonitril)]-tetrakis-(3,5-bis-(trifluormethyl)phenyl)borat sowie die entsprechenden Palladium- und Nikkeldihalogenidkomplexe, insbesondere Nickeldibromid- und Palladiumdichloridkomplexe der hier genannten Diiminliganden. Des weiteren sind unter den vorgenannten Verbindungen solche besonders geeignet, die als ortho-ständige Substituenten die 3,5-Dimethylphenyl-, die 2,4,6-Trimethylphenyl-, die 2,4,6-Tris-(i-propyl)phenyl- oder die 2,4,6-Tris-(t-butyl)phenylgruppe aufweisen. Anstelle von Tetrakis-(3,5-bis-(trifluormethyl)phenyl)borat (B[C₆H₃(CF₃)₂]₄^{⊖}) als Gegenion A können in bevorzugten Übergangsmetallverbindungen (I) ebenfalls Hexafluoroantimonat oder Hexafluorophosphat (PF₆^{⊖}) verwendet werden.

Die Übergangsmetallverbindungen (I) können in den erfindungsgemäßen Verfahren als Einzelverbindung oder in Form einer Mischung aus mehreren unterschiedlichen Übergangsmetallverbindungen (I) als Katalysator eingesetzt werden. Besonders geeignete polymerisationsaktive Übergangsmetallverbindungen, die nicht auf einen Cokatalysator angewiesen sind, sind die oben genannten. Palladiummethylkomplexe mit Acetonitril als Lewis-Base-Ligand und einem Borat, Hexafluorophosphat oder -antimonat als Gegenion A.

Die Übergangsmetallverbindungen (I) weisen als Strukturelement einen zweizähnigen Bisiminchelatliganden auf (in Formel (I) dasjenige Strukturelement, das man unter Weglassung der Komponenten M, T, Q und A erhält). Diese zweizähnigen Liganden können z.B. aus Glyoxal oder Diacetyl durch Umsetzung mit primären Aminen wie 2,6-Diphenylanilin, 2,6-Di-(4'-methylphenyl)anilin, 2,6-Di-(4'-t-butylphenyl) anilin oder 2,6-Di-(4'-methoxyphenyl)anilin erhalten werden.

Letztgenannte Verbindungen sind auf einfache Weise aus primären Aminen wie 2,6-Dibromanilin, 2,6-Dichloranilin, 2,6-Dibrom-4-methylphenylamin oder 2,6-Dichlor-4-methylphenylamin palladiumkatalysiert mittels Suzuki-Kupplung mit Boronsäurederivaten zugänglich (s.a. Suzuki et al., Synth. Commun., 1981, 13, 513-519 und J. Am. Chem. Soc., 1989, 111, 314-321, sowie Mirua et al., Synthesis, 1995, 1419-1422). Die Herstellung der 2,6-Dihalogenphenylverbindungen findet sich z.B. bei C. van Koten und K. Vrieze, Adv. Organomet. Chem. 1982, Vol. 21, 152-234, Academic Press, New York, beschrieben.

Die Übergangsmetallverbindungen, in denen p = 1, 2 oder 3 bedeutet, sind z.B. aus solchen Komplexen zugänglich, in denen Q für ein Halogenid, insbesondere ein Chlorid, und T für Methyl stehen. In der Regel behandelt man diese Komplexe in Gegenwart von Acetonitril, Benzonitril, Dimethylsulfoxid, Dimethylformamid, Hexamethylphosphorsäuretriamid oder einem linearen oder cyclischen Ether wie Diethylether mit einem Alkali- oder Silbersalz (M¹)⁺A⁻ mit A in der bezeichneten Bedeutung eines nicht- oder schlecht koordinierenden Anions und M¹ z.B. in der Bedeutung eines Natrium-, Kalium-, Lithium-, Caesium- oder Silberkations, also z.B. Natrium-(tetra(3,5-bis-(trifluormethyl)phenyl)borat) oder Silberhexafluoroantimonat. Beispielhaft sei auf die bei Mekking et al., J. Am. Chem. Soc., 1998, 120, 888-899, beschriebene Herstellung von Verbindungen gemäß Formel (I) verwiesen.

Die Ausgangsverbindung, in der Q ein Halogenid darstellt, kann durch Behandlung eines entsprechenden Cyclooctadienkomplexes mit einem zweizähnigen Bisiminchelatliganden in einem nicht-koordinierenden Lösungsmittel wie Dichlormethan erhalten werden. Derartige Herstellungsverfahren sind dem Fachmann bekannt und beispielsweise bei Johnson et al., J. Am. Chem. Soc. 1995, 117, 6414, und J.H. Groen et al., Organometallics, 1997, 17, 68, beschrieben. Für die Herstellung der Cyclooctadienkomplexe sei z.B. auf H. Tom Dieck et al., Z. Naturforschung, 1981, 36b, 823, und D. Drew und J.R. Doyle, Inorganic Synthesis, 1990, 28, 348, sowie auf die deutsche Patentanmeldung DE 19730867 verwiesen. Die Übergangsmetallkomplexe (I) können ebenfalls ausgehend von Verbindungen wie (TMEDA)MMe₂ (TMEDA = N,N,N',N'-Tetramethylethylendiamin; Me = Methyl) erhalten werden. Die (TMEDA)-Komplexe sind zum Beispiel nach einer Vorschrift von de Graaf et al., Rec.

Trav. Chim. Pay-Bas, 1988, 107, 299, aus den entsprechenden Dichloridkomplexen zugänglich.

Des weiteren können die Übergangsmetallkomplexe (I) ausgehend von Lewis-Base-Adukten der Metallsalze wie Palladium(II)bis(acetonitril)chlorid durch Behandlung mit einem zweizähnigen Bisiminchelatliganden erhalten werden (s.a. G. K. Andersen, M. Lin, Inorg. Synth., 1990, 28, 61, sowie R. R. Thomas, A. Sen, Inorg. Synth., 1990, 28, 63). Die resultierenden Halogenmetalldiiminkomplexe können mittels alkylierender Reagenzien wie Zinntetramethyl (SnMe₄) (s.a. EP-A 0 380 162) in die gewünschten Monoalkylderivate überführt werden.
Ausgangspunkt für die Herstellung der Übergangsmetallkomplexe (I) sind geeignete Metallsalze bzw. deren Mono-, Di- oder Trihydrate wie Cobalt(II)chlorid, Cobalt(II)bromid, Eisen(III)chlorid sowie insbesondere Nickel(II)chlorid, Rhodium(III) chlorid, Ruthenium(III)chlorid, Palladium(II)bromid, Palladium(II)chlorid oder Platin(II)chlorid. Besonders bevorzugt sind Nickel(II)bromid bzw. Dimethoxyethan-Nickel(II)bromid [(DME)NiBr₂] und Palladium(II)chlorid. Diese Metallsalze sowie deren Herstellung sind im allgemeinen literaturbekannt und häufig kommerziell erhältlich.

In einer weiteren Ausführungsform kann neben der Übergangsmetallverbindung (I) ein Cokatalysator mitverwendet werden. Geeignete Cokatalysatoren umfassen starke neutrale Lewis-Säuren, ionische Verbindungen mit Lewis-sauren Kationen und ionische Verbindungen mit Brönsted-Säuren als Kationen.

Als starke neutrale Lewis-Säuren sind Verbindungen der allgemeinen Formel

M²(X¹)ₐ(X²)_{b}(X³)_{c} IIa

bevorzugt, in der
- M²: ein Alkali- oder Erdalkalimetall oder ein Element der III. Hauptgruppe des Periodensystems bedeutet, insbesondere Lithium, Mg, B, Al oder Ga, vorzugsweise B bedeutet und
- X¹, X², X³: unabhängig voneinander für Wasserstoff, lineares oder verzweigtes C₁- bis C₁₀-Alkyl, bevorzugt C₁- bis C₈-Alkyl, wie Methyl, Ethyl, n-Propyl, i-Propyl, n-Butyl, i-Butyl, t-Butyl oder n-Hexyl, ein- oder mehrfach substituiertes C₁- bis C₁₀-Alkyl, bevorzugt C₁- bis C₈-Alkyl, z.B. mit Halogenatomen wie Fluor, Chlor, Brom oder Jod, C₆- bis C₁₆-Aryl, vorzugsweise C₆- bis C₁₀-Aryl, z.B. Phenyl, das auch ein- oder mehrfach substituiert sein kann, beispielsweise mit Halogenatomen wie Fluor, Chlor, Brom oder Jod, z.B. Pentafluorphenyl, Alkylaryl mit 1 bis 10 C-Atomen, bevorzugt 1 bis 6 C-Atomen im Alkylrest und 6 bis 16 C-Atomen, bevorzugt 6 bis 10 C-Atomen im Arylrest, z.B. Benzyl, oder ein Halogenid wie Fluor, Chlor, Brom oder Jod stehen,
- a, b, c: eine ganze Zahl von 0 bis 3, wobei die Summe a+b+c der Wertigkeit von M² entspricht.

Besonders bevorzugt unter den Resten X¹, X², X³ sind solche, die über Halogensubstituenten verfügen. Vorzugsweise ist Pentafluorphenyl zu nennen. Besonders bevorzugt sind Verbindungen der allgemeinen Formel (IIa), in denen X¹, X² und X³ identisch sind, vorzugsweise Tris(pentafluorphenyl)boran. Des weiteren können als Verbindungen (IIa) auch Lithium-, Magnesium- oder Aluminiumalkyle oder Aluminiumhalogenalkyle wie in (n-Butyl) (n-octyl)magnesium, Triethyl-, Tri(n-hexyl)aluminium oder Di-i-propylaluminiumchlorid verwendet werden.

Unter den starken neutralen Lewis-Säuren wird des weiteren bevorzugt auf Alumoxanverbindungen als Cokatalysatoren zurückgegriffen. Als Alumoxanverbindungen kommen grundsätzlich solche Verbindungen in Betracht, die über eine Al-C-Bindung verfügen. Besonders geeignet als Cokatalysatoren sind offenkettige und/oder cyclische Alumoxanverbindungen der allgemeinen Formel (IIb) oder (IIc) 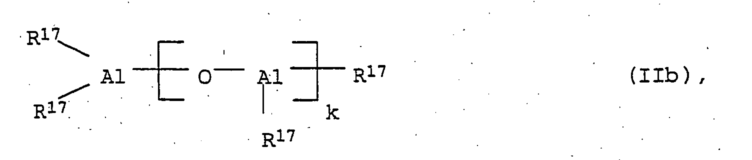 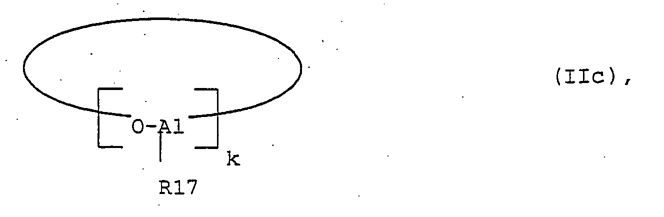 in denen
- R¹⁷: unabhängig voneinander eine C₁- bis C₄-Alkylgruppe bedeutet, bevorzugt eine Methyl- oder Ethylgruppe, und k für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 0 284 708 und der US-A 4,794,096 beschrieben.

In der Regel liegen die dabei erhaltenen oligomeren Alumoxanverbindungen als Gemische unterschiedlich langer sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, wie Triisobutylaluminium oder Triethylaluminium vorliegen. Bevorzugt wird Methylalumoxan (MAO), insbesondere in Form einer Lösung in Toluol eingesetzt. Die Herstellung von Methylalumoxan findet sich z.B. in der EP-A 284 708 detailliert beschrieben.

Weiterhin können als Cokatalysatoren Aryloxyalumoxane, wie in der US-A 5,391,793 beschrieben, Amidoaluminoxane, wie in der US-A 5,371,260 beschrieben, Aminoaluminoxanhydrochloride, wie in der EP-A 0 633 264 beschrieben, Siloxyaluminoxane, wie in der EP-A 0 621 279 beschrieben, oder Alumoxan-Mischungen eingesetzt werden.

Die beschriebenen Alumoxane werden entweder als solche oder in Form einer Lösung oder Suspension, beispielsweise in aliphatischen oder aromatischen Kohlenwasserstoffen, wie Toluol oder Xylol, oder deren Gemischen eingesetzt.

Geeignete ionische Verbindungen mit Lewis-sauren Kationen fallen unter die allgemeine Formel

G^{r+} [(L X⁴ X⁵ X⁶ X⁷)⁻]ᵣ (IId),

in der
- G: ein Element der I. oder II. Hauptgruppe des Periodensystems der Elemente, wie Lithium, Natrium, Kalium, Rubidium, Cäsium, Magnesium, Calcium, Strontium oder Barium, insbesondere Lithium oder Natrium, oder ein Silber-, Carbonium-, Oxonium-, Ammonium- (NHₓR'_{y}, x, y = 0, 1, 2, 3 oder 4, x+y = 4, R' = C₁- bis C₆-Alkyl oder C₆- bis C₁₀-Aryl), Sulfonium- oder 1,1'-Dimethylferrocenylkation,
- L: ein Element der III. Hauptgruppe des Periodensystems der Elemente bedeutet, insbesondere Bor, Aluminium oder Galium, vorzugsweise Bor,
- X⁴ bis X⁷: unabhängig voneinander für Wasserstoff, lineares oder verzweigtes C₁- bis C₁₀-Alkyl, bevorzugt C₁- bis C₈-Alkyl, wie Methyl, Ethyl, n-Propyl, i-Propyl, n-Butyl, i-Butyl, t-Butyl oder n-Hexyl, ein- oder mehrfach substituiertes C₁- bis C₁₀-Alkyl, bevorzugt C₁- bis C₈-Alkyl, z.B. mit Halogenatomen wie Fluor, Chlor, Brom oder Jod, C₆- bis C₁₆-Aryl, vorzugsweise C₆- bis C₁₀-Aryl, z.B. Phenyl, das auch ein- oder mehrfach substituiert sein kann, beispielsweise mit Halogenatomen wie Fluor, Chlor, Brom oder Jod, z.B. Pentafluorphenyl, Alkylaryl mit 1 bis 10 C-Atomen, bevorzugt 1 bis 6 C-Atomen im Alkylrest und 6 bis 16 C-Atomen, bevorzugt 6 bis 10 C-Atomen im Arylrest, z.B. Benzyl, Fluor, Chlor, Brom, Jod, C₁- bis C₁₀-Alkoxy, bevorzugt C₁- bis C₈-Alkoxy, wie Methoxy, Ethoxy oder i-Propoxy, oder C₆- bis C₁₆-Aryloxy, bevorzugt C₆- bis C₁₀-Aryloxy, z.B. Phenoxy, stehen, und
- r: 1 oder 2 bedeutet.

Bevorzugt stellt das Anion (L X⁴ X⁵ X⁶ X⁷)⁻ in einer Verbindung der allgemeinen Formel (IId) ein nicht koordinierendes Gegenion dar. Hervorzuheben sind z.B. Borverbindungen, wie sie in der WO 91/09882, auf die hier ausdrücklich Bezug genommen wird, genannt werden. Besonders geeignete Kationen L gehen zurück auf das Natrium- oder Triphenylmethylkation sowie auf Tetraalkylammoniumkationen, wie Tetramethyl-, Tetraethyl- oder Tetra-n-butylammonium, oder Tetraalkylphosphoniumkationen, wie Tetramethyl-, Tetraethyl- oder Tetra-n-butylphosphonium. Bevorzugte Verbindungen (IId) sind beispielsweise Natrium-tetrakis (pentafluorphenyl)borat oder Natrium-tetrakis[bis(trifluormethyl)phenyl] borat.

Ionische Verbindungen mit Brönsted-Säuren als Kationen und vorzugsweise ebenfalls nicht koordinierende Gegenionen sind in der WO 91/09882, auf die hier ausdrücklich Bezug genommen wird, genannt. Bevorzugt als Kation ist z.B. N,N-Dimethylanilinium.

Selbstverständlich können auch Mischungen der vorgenannten Cokatalysatoren eingesetzt werden.

Stellen in Komplexverbindungen (I) T wie Q ein Halogenid dar, wird als Cokatalysator bevorzugt auf offenkettige und/oder cyclische Alumoxanverbindungen zurückgegriffen.

Handelt es sich bei der Komplexverbindung (I) hingegen um eine Monoalkylhalogenverbindung, d.h. T bedeutet z.B. einen Alkylrest und Q ein Halogenid, dann ist als Cokatalysator eine ionische Verbindungen mit Lewis-saurem Kation, insbesondere Natrium-tetrakis(pentafluorphenyl)borat oder Natrium-tetrakis[bis(trifluormethyl)phenyl]borat bevorzugt.

Mit den Übergangsmetallkomplexverbindungen. (I) bzw. den beschriebenen Katalysatorsystemen enthaltend die Verbindung (I) lassen sich polare und unpolare olefinisch ungesättigte Monomere (co)polymerisieren.

Als unpolare olefinische Monomere kommen Verbindungen der allgemeinen Formel (III)

(R⁸)HC=C(R⁹) (R¹⁰) (III)

in Frage, in der die Substituenten die folgende Bedeutung haben:
- R⁸ bis R¹⁰: unabhängig voneinander Wasserstoff, C₁- bis C₁₀-Alkyl, worunter lineare wie auch verzweigte Alkylreste zu verstehen sind, bevorzugt C₁- bis C₆-Alkyl wie Methyl, Ethyl, n-, i-Propyl, n-, i- oder t-Butyl, C₆- bis C₁₆-Aryl, worunter auch mit C₁- bis C₆-Alkylgruppen wie Methyl, Ethyl oder i-Propyl ein-, zwei- oder mehrfach substituierte Arylreste wie Tolyl zu verstehen sind, bevorzugt C₆- bis C₁₀-Aryl wie Phenyl oder Naphthyl, insbesondere Phenyl, Alkylaryl mit 1 bis 10, bevorzugt 1 bis 6 C-Atomen im Alkyl- und 6 bis 16, bevorzugt 6 bis 10 C-Atomen im Arylteil, z.B. Benzyl, oder Si(R¹¹)₃ mit
- R¹¹: C₁- bis C₁₀-Alkyl, C₆- bis C₁₆-Aryl oder Alkylaryl mit 1 bis 10 C-Atomen im Alkyl- und 6 bis 16 C-Atomen im Arylteil, wobei diese Reste die unter R⁸ bis R¹⁰ angegebene bevorzugte bzw. spezielle Bedeutung annehmen können.

Die Reste R⁸ und R⁹ bzw. R¹⁰ können des weiteren zusammen mit der C=C-Doppelbindung einen ungesättigten Carbocyclus bilden. Geeignete cyclische Olefine (III) sind z.B. Cyclobuten, Cyclopenten, Cyclohexen oder Norbornen sowie substituierte Norbornene. Bevorzugt sind unter diesen Cyclopenten und Norbornen.

Geeignete unpolare olefinische Monomere können über eine, zwei oder mehrere endständige oder interne Doppelbindungen verfügen. Vorzugsweise werden olefinisch ungesättigte Verbindungen mit einer endständigen Doppelbindung wie Ethen, Propen, 1-Buten, 1-Penten, 1-Hexen oder 1-Octen eingesetzt. Besonders bevorzugt sind Ethen, Propen, 1-Buten und 1-Hexen, insbesondere Ethen. Darüber hinaus stellen auch perfluorierte Olefine wie Tetrafluorethylen geeignete unpolare Ausgangsmonomere (III) dar. Selbstverständlich können auch beliebige Gemische an Ausgangsmonomeren (III) in den erfindungsgemäßen Verfahren verwendet werden.

In einer Ausführungsform des erfindungsgemäßen Verfahrens werden als weitere Ausgangsmonomere α-Olefine (IV), die über mindestens eine funktionelle Gruppe im Molekül verfügen, eingesetzt.

Geeignete funktionelle Gruppen stellen . z .B . die Carbonsäure-, Carbonsäureester-, Carbonsäureamid-, Carbonsäureanhydrid-, Hydroxy-, Epoxy-, Siloxy-, Ether-, Keto-, Aldehyd-, Amino-, Nitril-, Oxazolin-, Sulfonsäure-, Sulfonsäureester- oder Halogenofunktionalitäten dar. Bevorzugte funktionelle Gruppen gehen u.a. zurück auf die Carbonsäureeinheit, auf Carbonsäureester-, Carbonssäureamid- oder -anhydridreste sowie auf die Ether- oder Ketogruppe.

Bevorzugt werden als Ausgangsmonomere (IV) funktionalisierte olefinisch ungesättigte Monomere der allgemeinen Formel

CH₂=C(R¹²) (R¹³) (IV)

eingesetzt, in der die Substituenten und Indizes die folgende allgemeine Bedeutung haben:
- R¹²: Wasserstoff, CN, CF₃, C₁- bis C₁₀-Alkyl, C₆- bis C₁₆-Aryl oder Alkylaryl mit 1 bis 10 C-Atomen im Alkyl und 6 bis 16 C-Atomen im Arylteil, Pyrrolidonyl oder Carbazolyl,
- R¹³: CN, C(O)R¹⁴, C(O)OR¹⁴, C(O)N(R¹⁴) (R¹⁵), CH₂Si(OR¹⁶)₃, C(O)-O-C(O)R¹⁴, O-C₁- bis -O-C₁₀-Alkyl, O-C₆- bis -O-C₁₆-Aryl mit
- R¹⁴, R¹⁵: Wasserstoff, C₁- bis C₁₀-Alkyl, C₂- bis C₁₀-Alkenyl, C₆- bis C₁₆-Aryl oder Alkylaryl mit 1 bis 10 C-Atomen im Alkyl- und 6 bis 16 C-Atomen im Arylteil, eine Epoxygruppe enthaltende C₂- bis C₁₀-Alkylgruppe, eine mit einer Epoxygruppe substituierte C₆- bis C₁₆-Arylgruppe oder Si(R¹⁶)₃ und
- R¹⁶: C₁- bis C₁₀-Alkyl, C₆- bis C₁₆-Aryl oder Alkylaryl mit 1 bis 10 C-Atomen im Alkyl- und 6 bis 16 C-Atomen im Arylteil.

Funktionalisierte olefinisch ungesättigte Comonomere (IV) verfügen über eine terminale Kohlenstoff/Kohlenstoff-Doppelbindung. Unter diesen Verbindungen sind (Meth)acrylsäure sowie die Esterund Amidderivate der (Meth)acrylsäure, vorzugsweise der Acrylsäure, sowie Acrylnitril oder Methacrylnitril oder deren Mischungen besonders geeignet. Bevorzugt sind die C₁- bis C₁₀-, insbesondere die C₁- bis C₈-Alkylester der Acryl- und Methacrylsäure, also z.B. die Methyl-, Ethyl-, n-, i-Propyl-, n-, i-, t-Butyl-, Hexyl-, Dicyclopentadienyl- oder 2-Ethylhexyl(meth) acrylat, wobei die Alkylreste linear oder verzweigt sein können. Weiterhin bevorzugt sind (Meth)acrylate mit einer Epoxygruppe in der Estereinheit, beispielsweise Glycidyl(meth)acrylate, sowie mit einer Alkenylgruppe wie Ethyliden oder Propyliden als Estereinheit. Acrylate sind besonders bevorzugt. Exemplarisch seien als besonders geeignet Methylacrylat, Ethylacrylat, n-Butylacrylat, t-Butylacrylat, Dicyclopentadienylacrylat, Glycidylacrylat, 2-Ethylhexylacrylat sowie Acrylsäure genannt. Besonders bevorzugt sind Methylacrylat und Glycidylacrylat. Ebenso können Methacryl- oder Acrylnitril eingesetzt werden. Selbstverständlich können auch beliebige Mischungen an Comonomeren (IV) eingesetzt werden. Die vorgenannten Monomere sind an sich bekannt und kommerziell erhältlich.

Die Ausgangskonzentration der beschriebenen funktionalisierten Monomere (IV) kann über einen weiten Bereich variiert werden und beispielsweise ohne weiteres Werte im Bereich von 3 bis 6 mol/l annehmen.

Soweit nicht an anderer Stelle ausdrücklich beschrieben, weisen die Reste C₁- bis C₁₀-Alkyl, C₃- bis C₁₀-Cycloalkyl, C₆- bis C₁₆-Aryl und Alkylaryl im Sinne der vorliegenden Erfindung als Substituenten die folgende allgemeine und bevorzugte Bedeutung auf. Unter C₁- bis C₁₀-Alkylreste fallen zum Beispiel die Methyl-, Ethyl-, n- oder i-Propyl, n-, i- oder t-Butyl- sowie die Pentyl-, Hexyl- oder Heptylgruppe in geradkettiger und verzweigter Form. Unter C₁- bis C₁₀-Alkylreste fallen, abgesehen von Monomer (III), auch solche, die mit funktionellen Gruppen auf der Basis der Elemente der Gruppen IVA, VA, VIA oder VIIA des Periodensystems substituiert sind, also beispielsweise partiell oder perhalogenierte Alkylreste wie Trichlormethyl, Trifluormethyl, 2,2,2-Trifluorethyl, Pentafluorethyl oder Pentachlorethyl sowie eine oder mehrere Epoxygruppen tragende Alkylreste, beispielsweise Propenoxy. Im Sinne der vorliegenden Erfindung sind unter den C₁- bis C₁₀-Alkylresten regelmäßig die C₁- bis C₈-Alkylreste bevorzugt.

Unter geeignete C₃- bis C₁₀-Cycloalkylreste fallen Carbo- wie auch Heterocyclen, also beispielsweise substituiertes und unsubstituiertes Cyclopropyl, Cyclobutyl, Cyclopentyl, Cyclohexyl, Cyclooctyl, Pyrrolidinyl, Pyrrolidonyl oder Piperidinyl. Unter den substituierten cycloaliphatischen Resten seien exemplarisch 1-Methylcyclohexyl, 4-t-Butylcyclohexyl und 2,3-Dimethylcyclopropyl genannt.

Unter geeignete C₆- bis C₁₆-Arylgruppen fallen ganz allgemein substituierte und unsubstituierte Arylreste. Unter den unsubstituierten Arylresten sind die C₆- bis C₁₀-Arylgruppen wie Phenyl und Naphthyl bevorzugt. Phenyl ist besonders bevorzugt. Bei den unsubstituierten wie auch den substituierten C₆- bis C₁₆-Arylgruppen weist die Angabe der Kohlenstoffatome (z.B. C₆-, C₁₀- oder C₁₆-) auf die Anzahl der Kohlenstoffatome hin, die das aromatische System bilden. Kohlenstoffatome aus möglichen Alkyl- und/oder Arylsubstituenten sind mit dieser Angabe noch nicht erfaßt. Die Angabe C₆- bis C₁₆-Aryl soll somit beispielsweise auch substituierte C₆- bis C₁₆-Arylreste wie substituiertes Anthracenyl umfassen. Unter C₆- bis C₁₆-Arylreste fallen, abgesehen von Monomer (I), auch solche Reste, die mit funktionellen Gruppen auf der Basis der Elemente aus den Gruppen IVA, VA, VIA und VIIA des Periodensystems der Elemente einfach, mehrfach oder persubstituiert sind. Geeignete funktionelle Gruppen sind C₁- bis C₁₀-Alkyl, bevorzugt C₁- bis C₆-Alkyl, C₆- bis C₁₆-Aryl, bevorzugt C₆- bis C₁₀-Aryl, Triorganosilyl wie Trimethyl-, Triethyl-, Triphenyl- oder t-Butyl-diphenylsilyl sowie Amino, beispielsweise NH₂, Dimethylamino, Di-i-propylamino, Di-n-butylamino, Diphenylamino oder Dibenzylamino, C₁- bis C₁₀-Alkoxy, bevorzugt C₁- bis C₆-Alkoxy, zum Beispiel Methoxy, Ethoxy, n- oder i-Propoxy, n-, i- oder t-Butoxy, oder Halogen wie Fluorid, Chlorid oder Bromid.

Unter geeignete Alkylarylreste fallen solche mit 1 bis 10, bevorzugt 1 bis 6 C-Atomen im Alkyl- und 6 bis 16, bevorzugt 6 bis 10 C-Atomen im Arylteil, insbesondere die Benzylgruppe.

Es hat sich als vorteilhaft erwiesen, insbesondere wenn in Gegenwart der funktionalisierten Comonomere (IV) polymerisiert wird, in geringen Mengen Radikalinhibitoren zuzusetzen. Als Radikalinhibitoren kommen mit sterisch anspruchsvollen Gruppen abgeschirmte aromatische Monohydroxyverbindungen, bevorzugt Phenole, die vicinal zur OH-Gruppe über mindestens eine sterisch anspruchsvolle Gruppe verfügen, in Betracht. Diese Radikalinhibitoren werden beispielsweise in der DE-A 27 02 661 (= US 4,360,617) beschrieben.

Geeignete phenolische Verbindungen sind den Verbindungsklassen der Alkylphenole, Hydroxyphenolpropionate, Aminophenole, Bis-phenole oder Alkylidenbisphenole zu entnehmen. Eine weitere Gruppe geeigneter Phenole leitet sich von substituierten Benzoecarbonsäuren ab, insbesondere von substituierten Benzoepropionsäuren.

Exemplarisch für die Verbindungsklasse der sterisch gehinderten Phenole seien genannt Bis(2,6-tert-butyl)-4-methylphenol (BHT), 4-Methoxymethyl-2,6-di-tert-butylphenol, 2,6-Di-tert-butyl-4-hydroxymethylphenol, 1,3,5-Trimethyl-2,4,6-tris-(3,5-di-tert-butyl-4-hydroxybenzyl)-benzol, 4,4'-Methylen-bis-(2,6-di-tert-butylphenol), 3,5-Di-tert-butyl-4-hydroxybenzoesäure-2,4-di-tert-butylphenylester, 2,2-Bis-(4-hydroxyphenyl)propan (Bisphenol A), 4,4'-Dihydroxybiphenyl (DOD), 2,2'-Methylen-bis(4-methyl-6-tert-butylphenol) , 1,6-Hexandiol-bis-3-(3,5-di-tert-butyl-4-hydroxyphenyl)propionat), Octadecyl-3-(3,5-bis(tert-butyl)-4-hydroxyphenyl)-propionat, 3,5-Di-tert-butyl-4-hydroxybenzyldimethylamin,2,6,6-Trioxy-1-phosphabicyclo-(2.2.2)oct-4-yl-methyl-3,5-di-tert-butyl-4-hydroxyhydrozimtsäureester und N,N'-Hexamethylen-bis-3,5-di-tert-butyl-4-hydroxyhydrozimtsäureamid. Unter den genannten sterisch gehinderten Phenolen sind Bis(2,6-(C₁- bis C₁₀-alkyl)-4-(C₁- bis C₁₀-alkyl)phenole, insbesondere Bis(2,6-tert-butyl)-4-methylphenol und Bis(2,6-methyl)-4-methylphenol bevorzugt. Besonders bevorzugt ist Bis(2,6-tert-butyl)-4-methylphenol.

Daneben können anstelle der sterisch gehinderten Phenole oder auch als Zusatz zu diesen als Radikalinhibitoren Tetraalkylpiperidin-N-oxylradikale eingesetzt werden. Geeignet sind z.B. 2,2,6,6-Tetramethyl-1-piperidinyloxy (TEMPO), 4-Oxo-2,2,6,6-tetramethyl-1-piperidinyloxy (4-Oxo-TEMPO), 4-Hydroxy-2,2,6,6-tetramethyl-1-piperidinyloxy, 2,2,5,5-Tetramethyl-1-pyrrolidinyloxy, 3-Carboxy-2,2,5,5-tetramethyl-pyrrolidinyloxy oder Di-tert-butylnitroxid. 2,6-Diphenyl-2,6-dimethyl-1-piperidinyloxy sowie 2,5-Diphenyl-2,5-dimethyl-1-pyrrolidinyloxy können ebenfalls eingesetzt werden. Mischungen verschiedener N-Oxyl-Radikale sind selbstverständlich auch möglich.

Die beschriebenen Radikalinhibitoren können entweder als solche oder gelöst in einem geeigneten inerten Lösungsmittel, z.B: Toluol oder einem halogenierten Kohlenwasserstoff wie Dichlormethan oder Chloroform, zugegeben werden.

In der Regel reichen bereits Mengen an einer mit sterisch anspruchsvollen Gruppen abgeschirmten aromatischen Monohydroxyverbindung oder einer mit sterisch anspruchsvollen Gruppen abgeschirmten N-Oxyl-Radikalverbindung kleiner 200, kleiner 100 oder sogar kleiner 20 ppm aus, bezogen auf die Ausgangsmenge an funktionalisierten olefinisch ungesättigten Monomeren, um einen einwandfreien Verlauf des erfindungsgemäßen Verfahrens zu gewährleisten. Dieses gelingt ebenfalls mit Mengen kleiner 10, 5 und sogar 2 ppm. Andererseits sind auch Konzentrationen an Radikalinhibitor zulässig, die die Konzentration der Übergangsmetallverbindung im Reaktionsgemisch um das doppelte, dreifache oder auch vierfache übersteigen.

Die Herstellung der (Co)polymere gemäß dem erfindungsgemäßen Verfahren kann in einem aliphatischen oder aromatischen aprotischen Lösungsmittel, z.B. in Heptan, i-Butan, Toluol oder Benzol, ebenso wie in einem polaren aprotischen Lösungsmittel durchgeführt werden. Geeignete polare aprotische Lösungsmittel sind z.B. halogenierte Kohlenwasserstoffe wie Dichlormethan, Chloroform, Tetrachlorkohlenstoff oder Chlorbenzol, lineare oder cyclische Ether wie Diethylether oder Tetrahydrofuran, des weiteren Aceton, Dimethylsulfoxid, Dimethylformamid, Hexamethylphosphorsäuretriamid oder Acetonitril. Selbstverständlich können auch beliebige, vorzugsweise homogene Mischungen der vorgenannten Lösungsmittel eingesetzt werden. Besonders bevorzugt sind Dichlormethan, Chloroform, Toluol, Chlorbenzol und Acetonitril sowie deren Mischungen, insbesondere Toluol, Chlorbenzol und Dichlormethan.

Die Lösungsmittelmenge wird üblicherweise so bestimmt, daß die Ausgangsverbindungen zu Beginn der Reaktion in gelöster Form vorliegen. Das übergangsmetallkatalysierte Polymerisationsverfahren kann auch in Masse oder in der Gasphase durchgeführt werden.

Bei der Polymerisation in der Gasphase können die Übergangsmetallverbindungen (I) auch in geträgerter Form eingesetzt werden. Als Trägermaterialien kommen anorganische wie organische Materialien in Frage. Geeignete anorganische Trägermaterialien sind zum Beispiel Silicagel, Aluminium-, Magnesium-, Titan-, Zirkonium-, Bor-, Calcium- oder Zinkoxide, Alumosilikate, Polysiloxane, Talkum, Schichtsilikate, Zeolithe oder Metallhalogenide wie MgCl₂. Organische Trägermaterialien gehen beispielsweise auf Präpolymere von Olefin(co)polymeren, wie sie z.B. mit den erfindungsgemäßen Verfahren erhalten werden, zurück. Geeignete Trägerungsverfahren sind dem Fachmann bekannt und finden sich u.a. für geträgerte Ziegler-Natta-Katalysatoren in Makromol. Chem. Phys. 1994, 195, 3347, Macromol. Rapid Commun. 1994, 15, 139-143 und Angew. Chem. Int. Ed. Engl. 1995, 34, 1143-1170) sowie für geträgerte Metallocenkatalysatoren in der EP-A-0 308 177 sowie in US 4,897,455, US 4,912,075 und US 5,240,894 beschrieben.

Das erfindungsgemäße Verfahren kann sowohl in Gegenwart von definierten Übergangsmetallverbindungen (I) als auch unter Verwendung der die Verbindung (I) bildenden Komponenten, d.h. in situ, vorgenommen werden. In letzterem Fall wird vorteilhafter Weise ein geringer Überschuß an Ligandverbindung, bezogen auf die Metallverbindung, eingesetzt.

Üblicherweise wird die Copolymerisation bei Temperaturen im Bereich von -40 bis 160°C, bevorzugt im Bereich von -20 bis 100°C und besonders bevorzugt von 0 bis 80°C durchgeführt. Die Reaktionszeiten liegen im allgemeinen in Abhängigkeit von den gewählten Reaktionsbedingungen zwischen 1 bis 2 Stunden und mehreren Tagen. Gasförmige Reaktionskomponenten wie Ethen werden auf das Reaktionsgemisch aufgepreßt.

Die Polymerisationsreaktionen können auch in Gegenwart von Wasserstoff durchgeführt werden, wodurch sich auch das Molekulargewicht steuern läßt. Je größer der Wasserstoffpartialdruck ist, um so kleiner wird der Wert für das Molekulargewicht. Darüber hinaus führt die Anwesenheit von Wasserstoff bei dem dargestellten Verfahren zu einer nicht unerheblichen Aktivitätssteigerung.

Die Copolymerisation findet im allgemeinen bei einem Druck im Bereich von 0,1 bis 200 bar, bevorzugt von 0,5 bis 100 bar und besonders bevorzugt von 1 bis 80 bar statt.

Die Konzentration an Übergangsmetallverbindung (I) wird im allgemeinen auf Werte im Bereich von 10⁻⁶ bis 0,1, bevorzugt im Bereich von 10⁻⁵ bis 10⁻² und besonders bevorzugt im Bereich von 5 x 10⁻⁵ bis 5 x 10⁻² mol/l eingestellt.

Die Ausgangskonzentration an unpolarem Olefin (III) liegt im allgemeinen im Bereich von 10⁻³ bis 10 mol/l, bevorzugt im Bereich von 10⁻² bis 5 mol/l. Die Ausgangskonzentration an mit einer funktionellen Gruppe substituierten α-Olefin (IV) liegt in der Regel im Bereich von 10⁻⁵ bis 8 mol/l, bevorzugt von 10⁻³ bis 7 und besonders bevorzugt von 10⁻¹ bis 6,8 mol/l.

Das molare Verhältnis von funktionalisiertem zu unpolarem Monomer in der Ausgangsmischung liegt üblicherweise im Bereich von 10⁻³ : 1 bis 1000 : 1, bevorzugt im Bereich von 10⁻¹ : 1 bis 100 : 1, besonders bevorzugt von 0,1 : 1 bis 20 : 1.

Das molare Ausgangsverhältnis von Radikalinhibitoren zu funktionalisiertem Monomer (IV) bewegt sich im allgemeinen im Bereich von 10⁻⁸ : 1 bis 10⁻¹ : 1, bevorzugt von 10⁻⁷ : 1 bis 10⁻² : 1 und besonders bevorzugt von 5 x 10⁻⁷ : 1 bis 10⁻⁴ : 1.

Die Polymerisation kann durch Zugabe eines Desaktivierungsreagenzes wie Triphenylphosphin und/oder durch Zugabe eines niedermolekularen Alkohols wie Methanol oder Ethanol abgebrochen werden. Werden als Cokatalysatoren Aluminiumalkylverbindungen bzw. Alumoxane eingesetzt, empfiehlt sich die Verwendung eines niedermolekularen Alkohols.

Die gemäß dem erfindungsgemäßen Verfahren erhaltenen (Co)polymere weisen Molekulargewichtsverteilungen M_{w}/Mₙ im Bereich von 1,1 bis 5, bevorzugt von 1,1 bis 3,0 auf.

Die Anzahl der Alkyl Verzweigungen pro 1000 C-Atome liegt bei den erhaltenen (Co)polymeren üblicherweise oberhalb von 15, wenn z.B. M = Pd in (I). Mit Übergangsmetallverbindungen (I), in denen M = Ni ist, werden dagegen (Co)polymere, zum Beispiel Polyethylene, mit einem sehr hohen Grad an Linearität erhalten. Demgemäß sind mit Palladiumkomplexen (I) elastomere Polymere zugänglich mit Glasübergangstemperaturen kleiner 0, bevorzugt kleiner -10°C. Mit Nickelkomplexen (I) hergestellte Polymere sind in der Regel kristallin oder teilkristallin und weisen Schmelzpunkte oberhalb 100°C auf.

Mit dem erfindungsgemäßen Verfahren lassen sich Homo- und Copolymere aus Monomeren (III) sowie Copolymere aus den Monomeren (III) und (IV) erhalten. Das Verfahren läßt sich sowohl kontinuierlich wie auch diskontinuierlich durchführen.

Die Übergangsmetallverbindungen (I) zeichnen sich durch hohe Aktivitäten, insbesondere auch bei niedrigen Drücken aus, und weisen zudem auch bei längerer Polymerisationsdauer keine Aktivitätseinbußen auf. Des weiteren lassen sich mit dem erfindungsgemäßen Verfahren Polyolefine mit sehr hohen Molekulargewichten erhalten. Außderdem erlauben die Übergangsmetallverbindungen (I) je nach Wahl des Metalls M die Herstellung hochverzweigter wie auch linearer Polyolefine.

Die vorliegende Erfindung wird nachfolgend anhand von Beispielen erläutert.

### Beispiele

Die Gelpermeationschromatographie wurde an einem Gerät der Firma Waters (150C) mit Trichlorbenzol als Eluens gegen einen Polystyrolstandard durchgeführt. Die Detektion erfolgte über die Bestimmung der Brechungsindizes.

Die ¹³C-NMR-Spektren wurden an einem Gerät der Firma Bruker (AC200) mit CDCl₃ bzw. C₂D₂Cl₄ als Lösungsmittel aufgenommen. Die ¹H-NMR-Spektren wurden an einem Gerät der Firma Bruker (AMX 500) mit CDCl₃ bzw. C₂D₂Cl₄ als Lösungsmittel aufgenommen.

Die DSC-Spektren wurden an einem Gerät der Firma Perkin-Elmer (Series 7) bei einer Heizrate von 20 K/min aufgenommen.

Alle Arbeiten mit metallorganischen Reagenzien wurden unter einer Inertgasatmosphäre durchgeführt (Argon). Dichlormethan wurde über Calciumhydrid unter Rückfluß gehalten und vor jeder Polymerisationsreaktion frisch destilliert. Benzol und Toluol wurden über Na/Benzophenon unter Rückfluß gehalten und ebenfalls frisch destilliert.

Phenylboronsäure wurde gemäß einer Vorschrift von Bowie und Musgrave, J. Chem. Soc., 1966, 566-571, hergestellt. Natrium-tetra (3,5-bis-(trifluormethyl)phenyl)borat) wurde nach der Vorschrift von Brookhart et al., Orgänometallics, 1992, 11, 3920-3922, hergestellt.

### A) Herstellung der Übergangsmetallverbindung (I)

### 1. 2,6-Diphenylphenylamin (1.a):

Zu 2,6-Dibromanilin (6,02 g) in Benzol (240 ml) gab man Phenylboronsäure (8,8 g), gelöst in Ethanol (36 ml) und 2M Natriumcarbonatlösung (72 ml), und Palladium-tetrakistriphenylphosphin (3,36 g) und erhitzte das Reaktionsgemisch 24 h unter Rückfluß. Nach Abkühlen auf Raumtemperatur wurde die abgetrennte organische Phase unter Rühren mit 10,5 M Salzsäure (30 ml) versetzt und das Produkt in Form des Hydrochloridsalzes mittels Filtration gewonnen. Aufschlämmen in Diethylether (100 ml), Zugabe von 2M-Natriumcarbonatlösung bis zur Auflösung des Feststoffs unter Rühren und Abtrennen der organischen Phase lieferte nach Behandeln mit Natriumsulfat und Entfernen des Lösungsmittels im Vakuum das gewünschte Produkt.

¹H-NMR (CDCl₃; Tetramethylsilan als Standard): d 3.75 (s, NH₂, 2H), 6.78 (t, 1H), 7.22 (d, 2H), 7.27 (t, 2H), 7.37 (t, 4H), 7.43 (t, 4H).

In analoger Weise wurde 2,6-Dibromanilin mit p-Methoxyphenylboronsäure sowie mit t-Butylphenylboronsäure zu den entsprechenden Phenylaminen A)1.b) bzw. A)1.c) umgesetzt.

### 2. Bisiminligand (2.a)

Zu 1.a) (2,45 g) in Benzol (.75 ml) gab man p-Toluosulfonsäure (0,3 g) und Diacetyl (0,48 ml). Das Reaktionsgemisch wurde unter Verwendung eines Wasserabscheiders 72 h unter Rückfluß erhitzt. Das Lösungsmittel wurde im Vakuum auf ein geringes Volumen eingeengt und das gewünschte Produkt durch Zugabe von Methanol ausgefällt.

¹H-NMR (C₂D₂Cl₄; Tetramethylsilan als Standard): d1.23 (-CH₃, 6H), 1.38 (t-Bu, 36H), 7.1-7.5 (m, 22H).

In analoger Weise wurde Diacetyl mit den Verbindungen A)1.b) bzw. A)1.c) zu den entsprechenden Diiminen A)2.b) und A)2.c) umgesetzt.

### 3. Herstellung von Übergangsmetallverbindungen (I)

### 3.1.Palladiumdichlorokomplex (3.b)

(PhCN) ₂PdCl₂ (1,15 g) und Verbindung A) 2.b) (3,05 g) wurden in Dichlormethan (250 ml) gelöst und 72 h bei RT gerührt. Durch Einengen des Lösungsmittels im Vakuum wurde der gewünschte Metallkomplex zur Ausfällung gebracht, mit Dichlormethan (20 ml) digeriert und anschließend mit Pentan (50 ml) versetzt. Der Metallkomplex wurde mittels Filtration abgetrennt und mit Pentan (50 ml) gewaschen.

In analoger Weise wurde (PhCN) ₂PdCl₂ mit Verbindungen A)2.a) und A)2.c) zu den entsprechenden Palladiumdichlorokomplexen A)3.1 a) und A)3.1 c) umgesetzt.

### 3.2. Herstellung des Palladiummonomethylkomplexes (4.b)

Der Metallkomplex nach 3.b) (0,6 g) wurde in Dichlormethan (120 ml) suspendiert und mit Zinntetramethyl (0,25 ml) versetzt. Nach 40-stündigem Rühren bei RT wurde das gebildete Palladium abgetrennt, die erhaltene Lösung auf ein Volumen von 20 ml im Vakuum eingeengt und mit Diethylether (ca. 100 ml) bis zur beginnenden Ausfällung des gewünschten Metallkomplexes versetzt. Nach Rühren für 30 min unter Eisbadkühlung wurde der erhaltene Feststoff mittels Filtration isoliert, mit Diethylether (60 ml) gewaschen und im Vakuum von letzten Lösungsmittelresten befreit.

### B) Polymerisationsexperimente im Druckautoklaven

### 1. Polymerisation von Ethen mit Palladiummonomethylkomplexen

Unter einer Argonatmosphäre gab man Metallkomplex nach A)4.b) (0.05 mmol) und Natrium-tetrakis [bis (trifluormethyl)phenyl] borat (55 mg) sowie Dichlormethan (25 ml). Es wurde Ethen aufgepreßt, die Reaktionstemperatur eingestellt und der Ethendruck während der gesamten Reaktionsdauer konstant gehalten. Nach Entspannen des Reaktionsgefäßes wurde das gebildete Polymer in Methanol (400 ml) ausgefällt, filtriert und im Vakuum bei 80°C von letzten Lösungsmittelresten befreit.

Nähere Angaben zu den eingesetzten Mengen, den Reaktionsbedingungen sowie den Produktparametern sind der Tabelle 1 zu entnehmen.

### 2. Polymerisation von Ethen mit Palladiumdichlorokomplexen

Unter einer Argonatmosphäre gab man Metallkomplex nach A)3.a) (0.05 mmol) und eine 1.5 M Lösung von Methylalumoxan in Toluol sowie Toluol (25 ml). Es wurde bei Raumtemperatur Ethen aufgepreßt und der Reaktionsdruck während der einstündigen Reaktionsdauer konstant gehalten. Nach Entspannen des Reaktionsgefäßes wurde das gebildete Polymer in Methanol (400 ml) ausgefällt, filtriert und im Vakuum bei 80°C von letzten Lösungsmittelresten befreit.

Nähere Angaben zu den eingesetzten Mengen, den Reaktionsbedingungen sowie den Produktparametern sind der Tabelle 2 zu entnehmen.

### 3. Polymerisation von Ethen mit Nickelkomplexen

### a) (DME)NiBr₂ (0,05 mmol) und eine Ligandverbindung gemäß

A) 2. (s.a. Tabelle 3) (0,075 mmol) wurden in Toluol (25 ml) suspendiert und 2 h bei RT gerührt. Nach Zugabe einer 1.5 M Lösung an Methylalumoxan in Toluol (500 Äquivalente) wurde Ethen aufgepreßt und der eingestellte Ethendruck über die Reaktionsdauer von 2 h konstant gehalten.

Nähere Angaben zu den eingesetzten Mengen, den Reaktionsbedingungen sowie den Produktparametern sind der Tabelle 3 A zu entnehmen.

b) (DME)NiBr₂ (s.a. Tabelle 3 B) und eine Ligandverbindung gemäß A)2. (s.a. Tabelle 3 B; 1.1 eq) wurden in Toluol suspendiert, 12 h bei RT gerührt und mit einer 1.5 M Lösung an Methylaluminoxan in Toluol (500 Äquivalente) aktiviert. Diese Katalysatormischung gab man zu einem unter einer Argonatmosphäre mit Toluol (800 ml) beschichteten 2000 ml Stahlautoklav, bei dem zuvor der gewünschte Ethendruck (s.a. Tabelle 3 B) eingestellt worden war.

Nähere Angaben zu den eingesetzten Mengen, den Reaktionsbedingungen sowie den Produktparametern sind der Tabelle 3 B zu entnehmen.

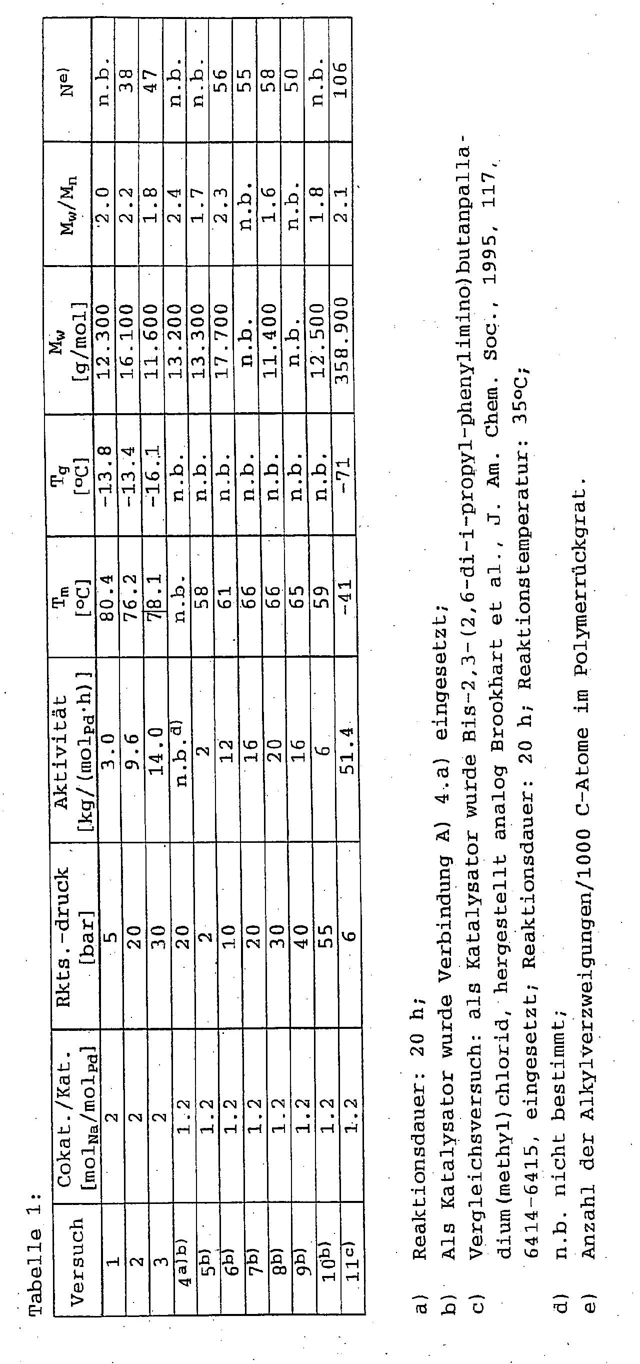

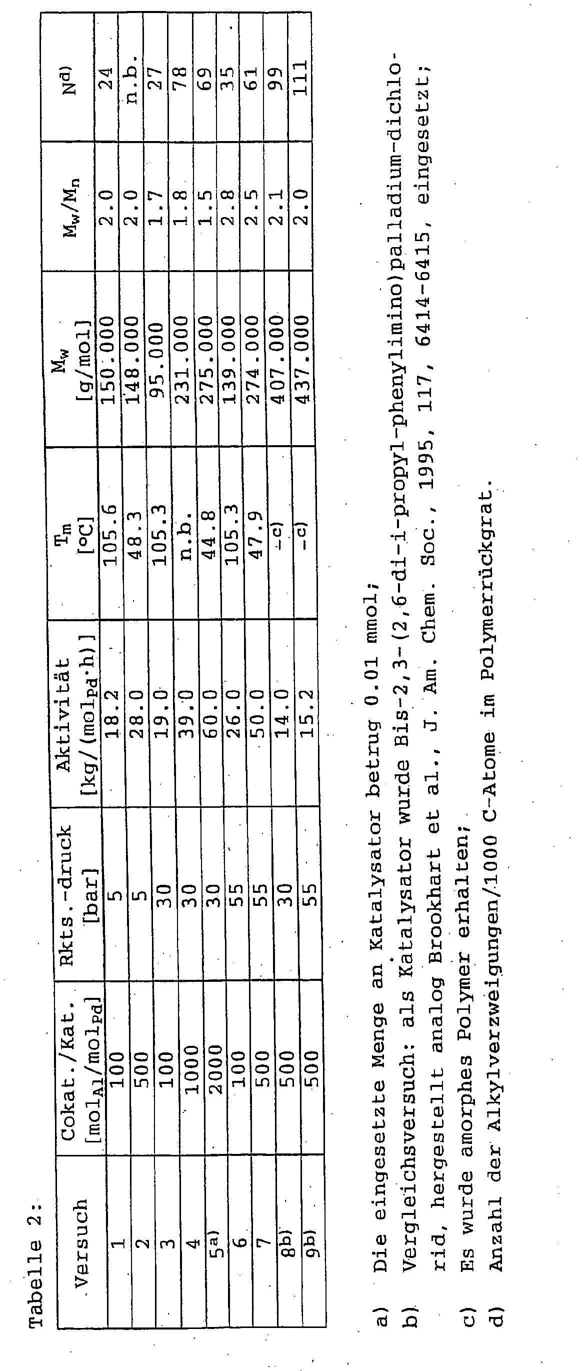

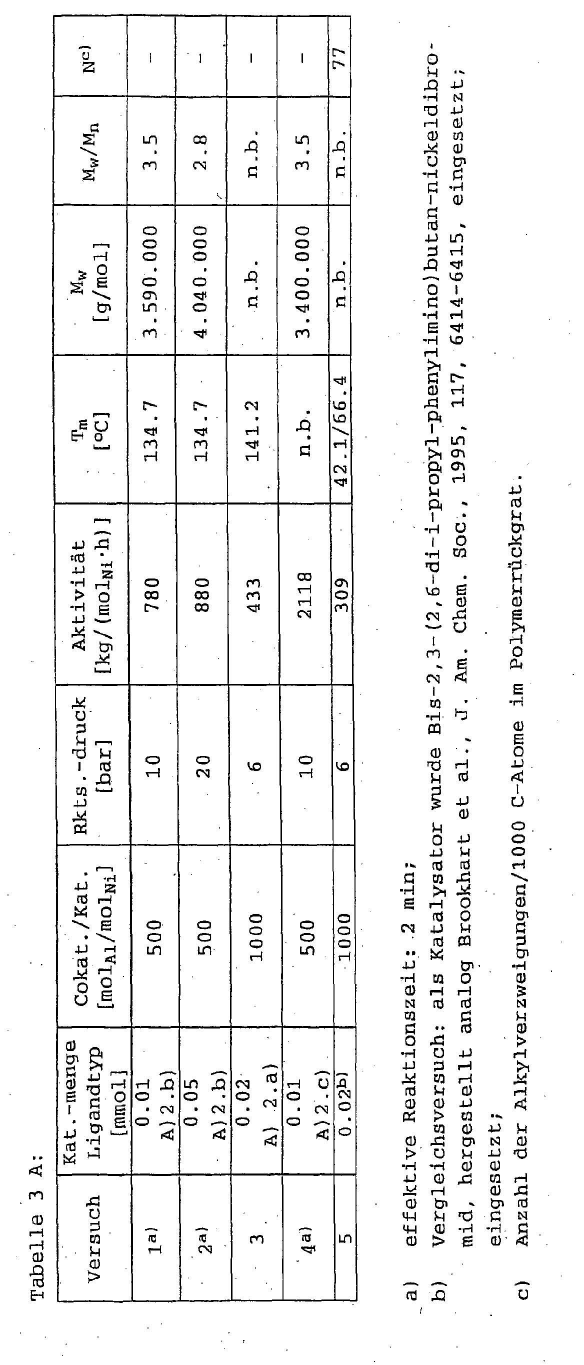

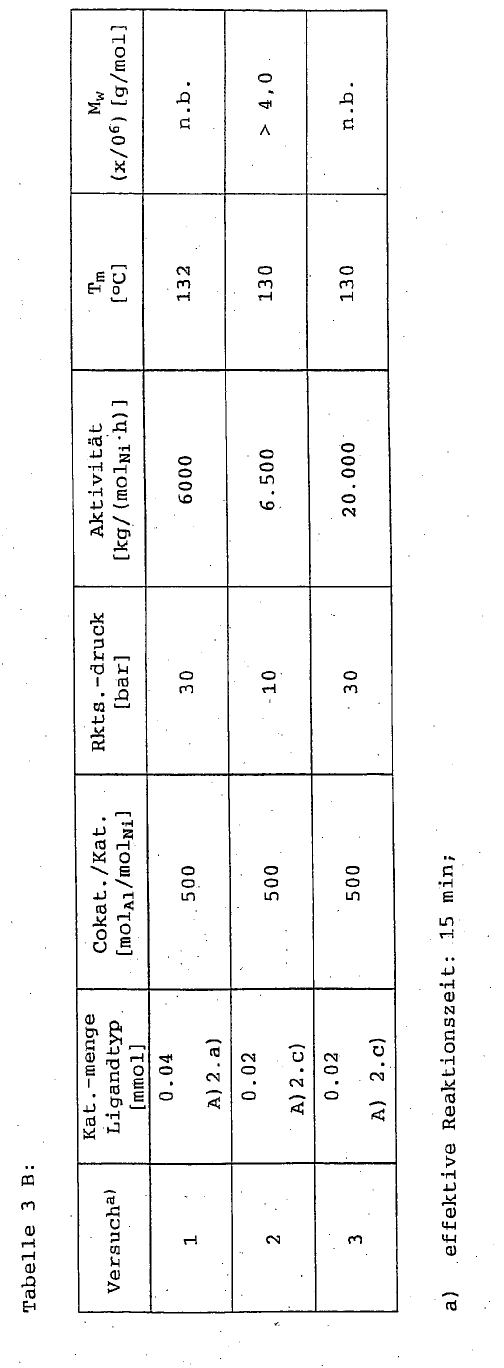

## Patentansprüche

1. Übergangsmetallverbindungen der allgemeinen Formel 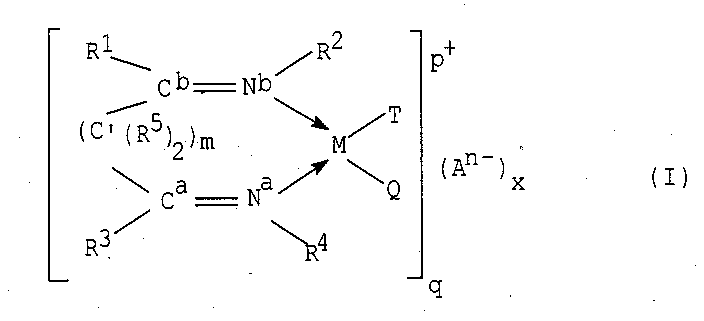 in der die Substituenten und Indizes die folgende Bedeutung haben:
R¹, R³ Wasserstoff, C₁- bis C₂₀-Alkyl, C₃- bis C₁₀-Cycloalkyl, C₆- bis C₁₆-Aryl, Alkylaryl mit 1 bis 10 C-Atomen im Alkyl- und 6 bis 16 C-Atomen im Arylteil, Si(R⁶)₃, N(R⁶) (R⁷), OR⁶, SR⁶ oder R¹ und R³ bilden gemeinsam mit C^{a}, C^{b} und gegebenenfalls C' einen fünf-, sechs- oder siebengliedrigen aliphatischen oder aromatischen, substituierten oder unsubstituierten Carbo- oder Heterocyclus,
R², R⁴ C₄- bis C₁₆-Hetero-Aryl oder C₆- bis C₁₆-Aryl mit C₄- bis C₁₆-Hetero-Aryl oder C₆- bis C₁₆-Arylsubstituenten in den beiden vicinalen Positionen zur Verknüfungsstelle mit N^{a} bzw. N^{b},
R⁵ Wasserstoff, C₁- bis C₁₀-Alkyl, C₆- bis C₁₆-Aryl oder Alkylaryl mit 1 bis 10 C-Atomen im Alkyl- und 6 bis 16 C-Atomen im Arylteil,
R⁶, R⁷ C₁- bis C₁₀-Alkyl, C₆- bis C₁₆-Aryl oder Alkylaryl mit 1 bis 10 C-Atomen im Alkyl- und 6 bis 16 C-Atomen im Arylteil,
m 0 oder 1,
M ein Metall der 8. bis 10. Gruppe des Periodensystems der Elemente,
T, Q neutrale oder monoanionische monodentate Liganden oder T und Q bilden zusammen eine Diketoenolateinheit oder eine C₂- oder C₃-Alkyleneinheit mit einer Methylketon- oder einer linearen C₁- bis C₄-Alkylester- oder Nitrilendgruppe,
A ein nicht oder schlecht koordinierendes Anion,
x, p 0, 1, 2 oder 3 und
q, n 1, 2 oder 3.

2. Übergangsmetallverbindungen nach Anspruch 1, **dadurch gekennzeichnet, dass** M Palladium oder Nickel bedeutet.

3. Übergangsmetallverbindungen nach den Ansprüchen 1 oder 2, **dadurch gekennzeichnet, dass** T Halogenid oder Methyl und Q Halogenid bedeuten.

4. Übergangsmetallverbindungen nach mindestens einem der Ansprüche 1 bis 3, **dadurch gekennzeichnet, dass** R² und R⁴ 2,6-Diphenyl sind und m = 0 ist.

5. Übergangsmetallverbindungen nach mindestens einem der Ansprüche 1 bis 4, **dadurch gekennzeichnet, dass** R² und R⁴ [2,6-Bis(4'-t-butylphenyl)phenyl] sind und m = 0 ist.

6. Übergangsmetallverbindungen nach mindestens einem der Ansprüche 1 bis 5, **dadurch gekennzeichnet, dass** R¹ und R³ H oder Methyl sind.

7. Übergangsmetallverbindung nach mindestens einem der Ansprüche 1 bis 6, **dadurch gekennzeichnet, dass** M = Ni.

8. Übergangsmetallverbindung nach mindestens einem der Ansprüche 1 bis 7, **dadurch gekennzeichnet, dass** T und Q Chlorid-, Bromid- oder Jodid-Anionen sind.

9. Verbindung der allgemeinen Formel 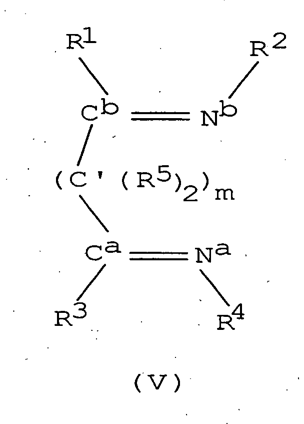 in der die Substituenten und Indizes die folgende Bedeutung haben:
R¹, R³ Wasserstoff, C₁- bis C₂₀-Alkyl, C₃- bis C₁₀-Cycloalkyl, C₆- bis C₁₆-Aryl, Alkylaryl mit 1 bis 10 C-Atomen im Alkyl- und 6 bis 16 C-Atomen im Arylteil, Si(R⁶)₃, N(R⁶) (R⁷), OR⁶, SR⁶ oder R¹ und R³ bilden gemeinsam mit C^{a}, C^{b} und gegebenenfalls C' einen fünf-, sechs- oder siebengliedrigen aliphatischen oder aromatischen, substituierten oder unsubstituierten Carbo- oder Heterocyclus,
R², R⁴ C₄- bis C₁₆-Hetero-Aryl oder C₆- bis C₁₆-Aryl mit C₄- bis C₁₆-Hetero-Aryl oder C₆ bis C₁₆-Arylsubstituenten in den beiden vicinalen Positionenen zur Verknüfungsstelle mit N^{a} bzw. N^{b},
R⁵ Wasserstoff, C₁- bis C₁₀-Alkyl, C₆- bis C₁₆-Aryl oder Alkylaryl mit 1 bis 10 C-Atomen im Alkyl- und 6 bis 16 C-Atomen im Arylteil,
R⁶, R⁷ C₁- bis C₁₀-Alkyl, C₆- bis C₁₆-Aryl oder Alkylaryl mit 1 bis 10 C-Atomen im Alkyl-, und 6 bis 16 C-Atomen im Arylteil,
m 0 oder 1.

10. Verbindung nach Anspruch 9, **dadurch gekennzeichnet, dass** R² und R⁴ unabhängig voneinander 2,6-Diphenyl-, 2,6-Bis(4'-methylphenyl)-, 2,6-Bis(4'-t-butylphenyl)-, 2,6-Bis(4'-methoxyphenyl)-, 2,6-Bis(3',5'-dimethylphenyl)-, 2,6-Bis(2',4',6'-trimethylphenyl)phenyl, 2,5-Diphenyl-, 2,5-Bis(4'-methylphenyl)-, 2,5-Bis(4'-t-butylphenyl), 2,5-Bis(4'-methoxyphenyl)-, 2,5-Bis(3',5'-dimentylphenyl)-, 2,5-Bis(2',4',6'-trimethylpheyl)pyrrolidyl, 2,5-Diphenyl-, 2,5-Bis(4'-methylphenyl)-, 2,6-Bis(4'-t-butylphenyl)-, 2,5-Bis(4'-methoxyphenyl)-, 2,5-Bis(3',5'-dimethylphenyl)- oder 2,5-Bis(2'-4',6'-trimethylphenyl)pyrrolidon sind.

11. Verbindung nach Anspruch 9, **dadurch gekennzeichnet, dass** R² und R⁴ beides 2,6-Diphenylphenyl sind und m = 0 ist.

12. Verbindung nach Anspruch 9, **dadurch gekennzeichnet, dass** R² und R⁴ [2,6-Bis(4-t-buthylphyenyl)phenyl] sind und m = 0 ist.

13. Verbindung nach Anspruch 9, 11 oder 13, **dadurch gekennzeichnet, dass** R¹ und R³ H oder Methyl sind.

14. Katalysatorsystem für die (Co)polymerisation von olefinisch ungesättigten Monomeren, enthaltend als wirksame Bestandteile Übergangsmetallverbindungen gemäß den Ansprüchen 1 bis 8 und eine starke neutrale Lewis-Säure, eine ionische Verbindung mit einem Lewis-sauren Kation oder eine ionische Verbindung mit einer Brönsted-Säure als Kation als Cokatalysator.

15. Katalysatorsystem nach Anspruch 14, **dadurch gekennzeichnet, dass** man als starke neutrale Lewis-Säure Alumoxanverbindungen oder als ionische Verbindung mit einem Lewis-saure Kation NaB[C₆H₃(CF₃)₂]₄ verwendet.

16. Verfahren zur Herstellung von Polymeren aus olefinisch ungesättigten polaren und/oder unpolaren Monomeren, **dadurch gekennzeichnet, dass** man die Ausgangsmonomere in Gegenwart einer Übergangsmetallverbindung der allgemeinen Formel 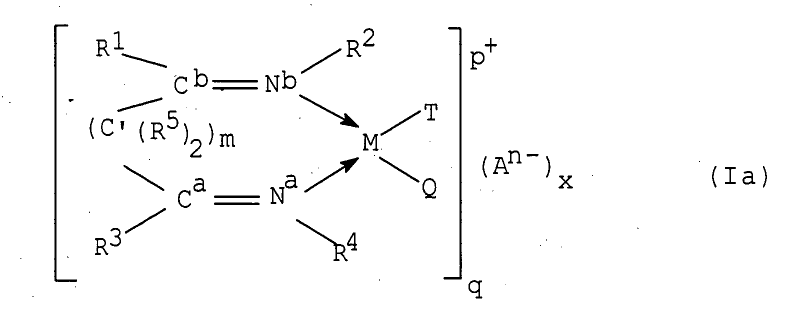 in der die Substituenten und Indizes die folgende Bedeutung haben:
R¹, R³ Wasserstoff, C₁- bis C₂₀-Alkyl, C₃- bis C₁₀-Cycloalkyl, C₆- bis C₁₆-Aryl, Alkylaryl mit 1 bis 10 C-Atomen im Alkyl- und 6 bis 16 C-Atomen im Arylteil, Si(R⁶)₃, N(R⁶) (R⁷), OR⁶, SR⁶ oder R¹ und R³ bilden gemeinsam mit C^{a}, C^{b} und gegebenenfalls C' einen fünf-, sechs- oder siebengliedrigen aliphatischen oder aromatischen, substituierten oder unsubstituierten Carbo- oder Heterocyclus,
R², R⁴ C₄- bis C₁₆-Hetero-Aryl oder C₆- bis C₁₆-Aryl mit C₄- bis C₁₆-Hetero-Aryl oder C₆- bis C₁₆-Arylsubstituenten in den beiden vicinalen Positionen zur Verknüpfungsstelle mit N^{a} bzw. N^{b},
R⁵ Wasserstoff, C₁- bis C₁₀-Alkyl, C₆- bis C₁₆-Aryl oder Alkylaryl mit 1 bis 10 C-Atomen im Alkyl- und 6 bis 16 C-Atomen im Arylteil,
R⁶, R⁷ C₁- bis C₁₀-Alkyl, C₆- bis C₁₆-Aryl oder Alkylaryl mit 1 bis 10 C-Atomen im Alkyl- und 6 bis 16 C-Atomen im Arylteil,
m 0 oder 1,
M ein Metall der 8. bis 10. Gruppe des Periodensystems der Elemente,
T, Q neutrale oder monoanionische monodentate Liganden oder T und Q bilden zusammen eine Diketoenolateinheit oder eine C₂- oder C₃-Alkyleneinheit mit einer Methylketon- oder einer linearen C₁- bis C₄-Alkylester- oder Nitrilendgruppe,
A ein nicht oder schlecht kooridnierendes Anion,
x, p 0, 1, 2 oder 3 und
q, n 1, 2 oder 3,
und gegebenenfalls einer starken neutralen Lewis-Säure, einer ionischen Verbindung mit einem Lewis-sauren Kation oder einer ionischen Verbindung mit einer Brönsted-Säure als Kation als Cokatalysator polymerisiert.

17. Verfahren nach Anspruch 16, **dadurch gekennzeichnet, dass** das Verfahren bei Temperaturen zwischen -40 °C und 160 °C durchgeführt wird.

18. Verfahren nach Anspruch 16 oder 17, **dadurch gekennzeichnet, dass** das Verfahren in Gegenwart von Wasserstoff durchgeführt wird.

19. Verfahren nach mindestens einem der Ansprüche 16 bis 18, **dadurch gekennzeichnet, dass** als Cokatalysator ein Aluminiumalkyl, ein Aluminiumhalogenalkyl oder eine Alumoxanverbindung verwendet wird.

20. Verfahren nach Anspruch 19, **dadurch gekennzeichnet, dass** die Alumoxanverbindung Methylalumoxan ist.

21. Verfahren nach mindestens einem der Ansprüche 16 bis 20, **dadurch gekennzeichnet, dass** R² und R⁴ unabhängig voneinander 2,6-Diphenyl-, 2,6-Bis(4'-methylphenyl)-, 2,6-Bis(4'-t-butylphenyl)-, 2,6-Bis(4'-methoxyphenyl)-, 2,6-Bis(3',5'-dimethylphenyl)-, 2,6-Bis(2',4',6'-trimethylphenyl)phenyl, 2,5-Diphenyl-, 2,5-Bis(4'-methylphenyl)-, 2,5-Bis(4'-t-butylphenyl), 2,5-Bis(4'-methoxyphenyl)-, 2,5-Bis(3',5'-dimentylphenyl)-, 2,5-Bis(2',4',6'-trimethylpheyl)pyrrolidyl, 2,5-Diphenyl-, 2,5-Bis(4'-methylphenyl)-, 2,6-Bis(4'-t-butylphenyl)-, 2,5-Bis(4'-methoxyphenyl)-, 2,5-Bis(3',5'-dimethylphenyl)- oder 2,5-Bis(2'-4',6'-trimethylphenyl)pyrrolidon sind.

22. Verfahren nach mindestens einem der Ansprüche 16 bis 21, **dadurch gekennzeichnet, dass** R² und R⁴ 2,6-Diphenylphenyl sind und m = 0 ist.

23. Verfahren nach mindestens einem der Ansprüche 16 bis 21, **dadurch gekennzeichnet, dass** R² und R⁴ [2,6-Bis(4-t-buthylphenyl)phenyl] sind und m = 0 ist.

24. Verfahren nach mindestens einem der Ansprüche 16 bis 23, **dadurch gekennzeichnet, dass** R¹ und R³ H oder Methyl sind.

25. Verfahren nach mindestens einem der Ansprüche 16 bis 24, **dadurch gekennzeichnet, dass** M, Pd oder Mi ist.

26. Verfahren nach Anspruch 25, **dadurch gekennzeichnet, dass** M Ni ist.

27. Verfahren nach mindestens einem der Ansprüche 16 bis 26, **dadurch gekennzeichnet, dass** Q und T Chlorid, Bromid oder Jodid sind.

28. Verfahren nach mindestens einem der Ansprüche 16 bis 27, **dadurch gekennzeichnet, dass** man Ethen als Ausgangsmonomer verwendet.

29. Verfahren nach Anspruch 28, **dadurch gekennzeichnet, dass** Ethylen als einziges Monomer verwendet wird.

30. Verfahren nach mindestens einem der Ansprüche 16 bis 29, **dadurch gekennzeichnet, dass** ein Ausgangsmonomer mit einer funktionellen Gruppe verwendet wird.

31. Verfahren nach mindestens einem der Ansprüche 16 bis 30, **dadurch gekennzeichnet, dass** das Verfahren in flüssiger Phase durchgeführt wird.

32. Verfahren nach einem der Ansprüche 16 bis 30, **dadurch gekennzeichnet, dass** das Verfahren in gasförmiger Phase durchgeführt wird.

33. Verfahren nach mindestens einem der Ansprüche 16 bis 32, **dadurch gekennzeichnet, dass** die Übergangsmetallverbindungen in geträgerter Form eingesetzt werden.
